# EUROPÄISCHE PATENTSCHRIFT

(11) **EP 2 112 545 B1**
(45) Veröffentlichungstag und Bekanntmachung des Hinweises auf die Patenterteilung: **26.08.2015**
(21) Anmeldenummer: 09005589.8
(22) Anmeldetag: 21.04.2009
(51) Int. Cl.: G02B 26/00, G09F 9/37, G09F 13/24

(54) **Fluidische Mehrfarbenanzeige**
Liquid multi-colour display
Affichage fluide à plusieurs couleurs

(30) Priorität: 22.04.2008 DE 102008020130
(43) Veröffentlichungstag der Anmeldung: 28.10.2009
(73) Patentinhaber: advanced display technology AG, 99050 Appenzell (CH)
(72) Erfinder: Müller-Marc, oliver, 9050 Appenzell (CH); Jerosch, Dieter, 65812 Bad Soden (DE)
(74) Vertreter: Angerhausen, Christoph

(56) Entgegenhaltungen:
- EP-A- 1 513 128
- US-A- 3 973 340
- US-A1- 2008 072 468
- US-B1- 6 747 777
- US-B1- 6 924 792

## Beschreibung

### Gebiet der Erfindung

Die Erfindung betrifft allgemein das Gebiet der Anzeigeinstrumente, und hier das Untergebiet der so genannten Displays, also Anzeigen, die Bilder oder Informationen darstellen, die im Normalfall aus einer Mehrzahl von einzelnen Bildpunkten zusammengesetzt sind, und bei denen in ausreichender Entfernung zum Display die einzelnen Bildpunkte optisch zu einem Gesamtbild verschmelzen. Speziell betrifft die Erfindung dabei solche Displays, bei welchen die Darstellung auf der Verwendung farbiger Flüssigkeiten beruht.

Konkret betrifft die Erfindung eine im Folgenden Subpixel genannte Vorrichtung zur gleichzeitigen Anzeige genau eines einzelnen, aus einer Anzahl diskreter Farben ausgewählten und in seiner Farbe festgelegten Punktes, sowie eine im Folgenden Pixel genannte Vorrichtung zur simultanen Anzeige von mehreren, in ihrer Farbe jeweils festgelegten Punkten unter Verwendung mehrerer erfindungsgemäßer Subpixel, wobei durch das simultane Anzeigen dieser Punkte ein variierbarer Farbeindruck entsteht. Weiter betrifft die Erfindung eine Vorrichtung zur Anzeige von farbiger Information unter Verwendung mehrerer erfindungsgemäßer Pixel, im Folgenden Display genannt. Schließlich betrifft die Erfindung ein Verfahren zur Anzeige farbiger Informationen unter Verwendung der erfindungsgemäßen Vorrichtung.

### Stand der Technik und Nachteile

Anzeigegeräte zur Darstellung von Informationen sind seit vielen Jahren in der Technik etabliert. Derartige Anzeigen können im einfachsten Fall z.B. Glühbirnen sein, mit denen lediglich eine binäre Ja-Nein-Information dargestellt werden kann. Komplexere Informationen können beispielsweise durch eine Mehrzahl entsprechender binärer Anzeigeinstrumente wie Punktmatrixanzeigen dargestellt werden. Derartige Anzeigen bestehen zumeist aus regelmäßigen Mustern von kleinen, im Wesentlichen punktförmigen Einzelanzeigen, wobei der Begriff "Punkt" nicht auf ausschließlich runde Einzelanzeigen beschränkt ist, sondern auch beliebige andere Formen umfasst.

Die Einzelanzeigen können dabei zum Beispiel mechanischer Natur sein; neben so genannten Fallblattanzeigen, die beispielsweise in meist großformatigen Anzeigetafeln und dergleichen Verwendung finden, können beispielsweise auch Kugeln, deren eine Hälfte Schwarz, und deren andere Hälfte weiß eingefärbt ist, je nach Ausrichtung der Kugel zu einem Betrachter einen schwarzen oder weißen Bildeindruck hervorrufen. Vorteilhaft an derartigen mechanischen Anzeigen ist vor allen Dingen die Tatsache, dass sie zur Anzeige einer statischen Information im Wesentlichen keine weitere Energiezufuhr benötigen. Lediglich zum Wechsel des darzustellenden Bildes erfordert der Betrieb der Anzeige Energie. Nachteilig an derartigen Anzeigen ist jedoch, dass das Umschalten zwischen den beiden Zuständen häufig nur langsam erfolgt, so dass diese Anzeigen nicht oder nur sehr eingeschränkt zur Darstellung von dynamischer Information wie zum Beispiel von bewegten Bildern oder Lauftexten geeignet sind. Ein weiterer Nachteil liegt in der Tatsache begründet, dass die Anzahl der mittels solcher Anzeigen darzustellenden Farben sehr begrenzt ist, da die mechanischen Mittel insbesondere im Falle der Nutzung von Kugeln nur wenige Farben auf ihrer Oberfläche tragen können. Dementsprechend ist auch das Mischen von Farben nur eingeschränkt möglich, so dass der darstellbare Farbraum entsprechend klein ist.

Des Weiteren umfasst der Stand der Technik auch solche Matrixanzeigen, bei denen die darzustellenden Informationen mittels kleiner, zumeist punktförmiger Lichtquellen erzeugt werden. Derartige Lichtquellen können beispielsweise Leuchtdioden (LEDs), Flüssigkristallanzeigen (LCDs), oder Dünnschichttransistor-Anzeigen (TFTs, thin film transistor) sein. Diese Anzeigen sind im Allgemeinen zur Darstellung einer sehr großen Anzahl von Farben und Helligkeiten in der Lage. Auch können die einzelnen Bildpunkte (Pixel) dieser Anzeigen so klein werden, dass sie auch aus nächster Nähe betrachtet mit dem menschlichen Auge nicht erkennbar sind. Umgekehrt sind aus dem Stand der Technik auch Pixel bekannt, welche so groß sind, dass der Betrachterabstand einige 10 Meter betragen muss, damit die durch die einzelnen Bildpunkte dargestellten Informationen überhaupt zusammenhängend wahrgenommen werden können. Nachteilig an derartigen Anzeigen, die auch als Aktiv-Matrixanzeigen bezeichnet werden können, ist vor allen Dingen der entsprechend hohe Energieverbrauch, da diese Anzeigen während der gesamten Benutzung laufend Energie verbrauchen. Insbesondere im Falle mobiler Anwendungen oder bei besonders großformatigen Anzeigeflächen wie z.B. Werbetafeln, deren Inhalt sich ohnehin nur selten ändert, wird dieser hohe Energieverbrauch oft nicht toleriert. Ein weiterer Nachteil von Aktiv-Matrixanzeigen bestimmter Bauart liegt in dem zumeist eng begrenzten Betriebstemperaturbereich. LCD-Anzeigen, die besonders stromsparend sind, nutzen Flüssigkristalle, die insbesondere bei Temperaturen unterhalb des Gefrierpunktes zu extrem trägen bis hin zu eingefrorenen Anzeigen führen. LED-Anzeigen kennen dieses Temperaturproblem nicht und sind daher grundsätzlich für einen großen Temperaturbereich verwendbar, verbrauchen jedoch gleichzeitig auch den meisten Strom.

Zur Erzeugung von Farben sind ebenfalls verschiedene Technologien bekannt. Diese unterscheiden sich im Wesentlichen dadurch, dass entweder die gewünschte Farbe innerhalb eines Bildpunktes (Pixels) vollständig erzeugt und von diesem abgestrahlt wird, oder dass die gewünschte Farbe durch die Mischung von mehreren, leichter darzustellenden einzelnen Farben beziehungsweise untergeordneten Bildpunkten (Subpixeln) erreicht wird. Bei einem genügend großen Betrachterabstand verschmelzen die einzelnen Farben der Subpixel zu dem gewünschten Farbeindruck. Wenngleich letztere Variante den Nachteil hat, dass die entsprechenden Subpixel zusammengenommen einen entsprechend größeren Pixel bilden und somit das darzustellende Bild daher entweder aus einem größeren Abstand zu betrachten ist oder aber entsprechend gröber wirkt, wird dieses Prinzip überall dort angewendet, wo der Fokus weniger auf extrem naturgetreuen Farben sowie besonders kleinen Anzeigen liegt, sondern wo der Vorteil von geringeren Herstellungskosten insbesondere im Falle besonders großformatiger Anzeigen überwiegt.

Ein gemeinsamer Nachteil nahezu aller aus dem Stand der Technik bekannten Anzeigen liegt in der Problematik einzelner defekter Bildpunkte begründet. Dementsprechend ist die Fehlerhaftigkeit einer gewissen, geringen Anzahl von Bildpunkten in TFT-Displays sogar zugelassen, da die Herstellung von vollkommen fehlerfreien Displays nur zu hohen Kosten beziehungsweise unter hohem Ausschuss realisierbar ist. Ein nachträgliches Reparieren defekter Bildpunkte ist im Normalfall nicht oder nur unter sehr hohem technologischen Aufwand möglich; dies gilt im übrigen gleichermaßen auch für LCD-Displays. Lediglich Matrixanzeigen, welche Leuchtdioden verwenden, und die zur Anzeige großformatiger Informationen mit relativ großen, einzelnen Bildpunkten ausgestattet sind, erlauben zumindest prinzipiell auch einen Austausch dieser einzelnen Bildpunkte.

Ein weiterer Nachteil der meisten der bisher beschriebenen Technologien ist die Starrheit der Anzeigen beziehungsweise der Substrate, auf welchen diese aufgebaut sind. Es ist dementsprechend im Normalfall nicht möglich, Anzeigen zu biegen, ohne dass diese dabei irreversibel beschädigt werden. Es kann jedoch von Vorteil sein, eine gewisse Biegsamkeit bereitzustellen, um beispielsweise Anzeigen auch auf gebogenen Untergründen wie z.B. Kfz-Armaturen oder Litfaßsäulen anbringen zu können.

Der Problematik zu hohen Energieverbrauchs begegnet beispielsweise das Dokument US 7,304,786 der Firma Liquavista (NL). Das hier beschriebene Anzeigeprinzip basiert auf der Nutzung farbiger Flüssigkeiten, genauer eines Zwei-PhasenGemisches aus einer farbigen Flüssigkeit (Wasser) mit einer Trägerflüssigkeit (Öl). Das Schalten eines einzelnen Bildpunktes erfolgt mittels des Effektes der Elektrobenetzung. Durch Verwendung des Effektes der Elektrobenetzung kann die Energieaufnahme insbesondere während der Darstellung von statischen Informationen drastisch gesenkt werden, da lediglich zum Ändern, nicht jedoch zum Halten einer Farbe Energie verbraucht wird. Allerdings eignen sich derartige Anzeigen zum einen nur zu einem Betrieb bei normalen Umgebungstemperaturen, zum anderen funktioniert die in dem Dokument beschriebene Technologie nur bis zu einer bestimmten Pixelgröße zuverlässig, weswegen insbesondere großformatige Anzeigen nicht mit einer derartigen Technik realisierbar sind. Außerdem umfassen die Pixel lediglich eine einzige Farbe, so dass die Anzeige mehrerer unterschiedlicher Farben nur mittels einer engen Anordnung von unterschiedlich gefärbten Subpixeln und einer Nutzung des optischen Verschmelzens derselben zu einem Pixel erreicht werden kann.

Einen ebenfalls sehr geringen Energieverbrauch weisen die Produkte der Firma E-Ink Corporation (USA) auf, deren Prinzip beispielsweise in dem Dokument US 6,120,588 ("Electronically addressable microencapsulated ink and display thereof") beschrieben ist. Dementsprechend fußt die Technologie auf kleinen, beispielsweise Schwarz und Weiß gefärbten Mikrokapseln, welche sich in beispielsweise runden, abgeschlossenen Kompartimenten befinden. Die unterschiedlich gefärbten Mikrokapseln sind dabei positiv beziehungsweise negativ geladen. Durch das Anbringen und nachfolgende Ansteuern von Elektroden werden die entsprechend gefärbten Mikrokapseln in einer parallel zu einem Betrachter liegenden Ebene entlang der Feldlinien eines elektrischen Feldes ausgerichtet, so dass ein schwarzer oder weißer Bildeindruck entsteht (elektrophoretischer Effekt). Da das Bewegen der Mikrokapseln mittels elektrischer Felder bewerkstelligt wird, ist hierzu nur eine sehr geringe Energie erforderlich. Derartige Anzeigen sind im Prinzip auch für einen größeren Temperaturbereich nutzbar, sofern die entsprechenden Werkstoffe für diesen Temperaturbereich ausgelegt werden. Ein besonderes Alleinstellungsmerkmal derartiger Anzeigen ist die hohe mechanische Flexibilität derselben, da die genannten Kompartimente zusammen mit den Elektroden bevorzugt auch in beziehungsweise auf dünne, flexible und zumindest teilweise transparente Folien einbeziehungsweise aufgebracht werden können. Allerdings ist dieses Anzeigeverfahren prinzipbedingt auf die Anzeige von zwei Farben wie beispielsweise Schwarz oder Weiß begrenzt, da jeder Farbe eine eigene Polarität zugeordnet werden muss, und naturgemäß nur zwei Polaritäten, nämlich plus und minus, zur Verfügung stehen. Mittels einer in der Druckschrift US 7,075,502 ("Full color reflective display with multichromatic sub-pixels") beschriebenen Kombination mehrerer, jeweils unterschiedlicher Farben umfassenden Subpixel lässt sich zwar ein erweiterter Farbeindruck erzeugen, jedoch unter der Maßgabe eines entsprechend gröberen Bildes bzw. eines größeren Betrachterabstandes, analog zu der weiter oben beschriebenen Variante.

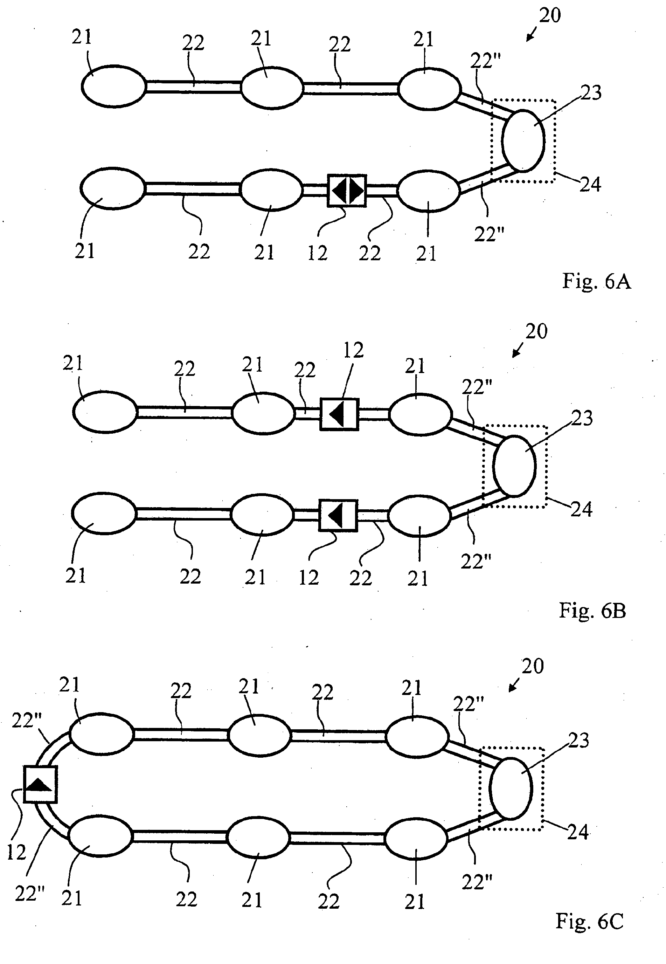

Aus der US 6,924,792 B1 ("Electrowetting and electrostatic screen display systems, color displays and transmission means") ist, wie insbesondere in den Figuren 6, 7 und 8 dargestellt, eine Vorrichtung zur Anzeige von farbiger Information unter Verwendung mindestens eines einzelnen, in seiner Farbe variierenden Pixels bekannt, bei der das mindestens eine Pixel aus mindestens einem Subpixel besteht, welches eine fluidische Kette umfasst. Die Farbwahl wird dabei nach der später geplanten Anwendung getroffen Der Anwendungsbereich reicht dabei von der Gestaltung von Gehäusen für Mobiltelefonen über Computer, Autodächer, Spielzeuge bis hin zu militärischen Anwendungen, aber auch die wiedergabe von Bild und Text.

Die US 2008/0072468 A1 offenbart eine Anzeigevorrichtung unter Verwendung farbiger Flüssigkeiten. Es ist vorgesehen, dass die einzelnen Pixel jeweils über einen Vor- und einen Rücklauf mit einem Flüssigkeitsvorhaltebehälter verbunden sind. Die Befüllung bzw. Entleerung der Pixel ist über elektrisch ansteuerbare Ventile und den Ventilen zugeordnete Transfermittel beeinflussbar.

### Aufgabe der Erfindung und Lösung

Ausgehend von dem eben geschilderten Stand der Technik ist es die Aufgabe der Erfindung, eine Vorrichtung zur Anzeige von farbigen Informationen zur Verfügung zu stellen, bei der eine deutlich verbesserte Darstellung des Farbraumes gewährleistet ist.

Die Aufgabe der Erfindung ist überdies die Bereitstellung einer Vorrichtung zur Anzeige von farbigen Informationen unter Verwendung einzelner Bildpunkte, wobei diese Bildpunkte sowohl bei deutlich unter dem Gefrierpunkt liegenden Temperaturen als auch bei Temperaturen bis in den Bereich des Siedepunktes von Wasser und darüber betreibbar sein müssen. Des weiteren muss die Vorrichtung mit möglichst wenig Energie betreibbar sein, wobei insbesondere bei der Anzeige statischer Informationen nach Möglichkeit im Wesentlichen keine oder nur sehr geringe Energie zur Anzeige notwendig ist. Außerdem soll die Vorrichtung einen leichten Austausch einzelner, beispielsweise defekter Bildpunkte erlauben, ohne dass eine größere oder gar die gesamte Anzahl der Bildpunkte ausgetauscht werden müsste. Der mittels der Vorrichtung abzubildende Farbraum soll zumindest ausreichend für die Darstellung von farbigen Werbeplakaten oder ähnlichem sein. Schließlich soll die erfindungsgemäße Vorrichtung Potenzial zur Herstellung zumindest geringfügig flexibler Anzeigen bieten.

Die Aufgabe wird durch die in Anspruch 1 vorgeschlagene Vorrichtung sowie das in Anspruch 18 vorgeschlagene Verfahren gelöst.

Dementsprechend nutzt die erfindungsgemäße Vorrichtung als Anzeigemedium Farben in Form von farbigen Flüssigkeiten, die anhand eines Mittels zum Transport in einem System von Kompartimenten transportierbar sind, wobei sie nur durch ein einziges dieser Kompartimente (Bildkompartiment) aus Richtung eines Betrachters gesehen sichtbar sind. Je nach Position der einzelnen Farben entsteht für den Betrachter ein unterschiedlicher Farbeindruck.

Grundlage der Erfindung bildet die Erkenntnis, dass der Farbraum optimal dargestellt wird, wenn als Grundfarben Rot, Grün, Blau, Cyan, Magenta, Gelb, Weiß und Schwarz verwendet werden. Die Farben in den Kompartimenten können dann so gewählt werden, dass der gewünschte Farbraum des Pixels optimal abgebildet werden kann. Beispielsweise ist mit einem Pixel aus 4 x 4 Subpixeln eine Anzahl von 245,157 Farben möglich. Wird ein Pixel beispielsweise durch 2 x 2 Subpixel definiert, sind zwar nur noch 330 Farben darstellbar, durch die geringere Pixelgröße ist aber eine bedeutend bessere Strukturauflösung möglich. Die Anpassung von Farbe und Auflösung kann durch Software geschehen.

Das erfindungsgemäße Verfahren dient der vorteilhaften Benutzung der erfindungsgemäßen Vorrichtung und beschreibt die Vorgehensweise bei der Initialisierung und dem Betrieb der Vorrichtung.

Weitere bevorzugte Ausführungsformen sind den abhängigen Ansprüchen sowie der nachfolgenden detaillierten Beschreibung und den Figuren zu entnehmen.

### Beschreibung

Die Erfindung betrifft eine Vorrichtung zur Anzeige von farbiger Information, auch Farbdisplay genannt. Erfindungsgemäß verwendet die Vorrichtung mindestens einen einzelnen, in seiner Farbe variierbaren Bildpunkt, im Folgenden Pixel genannt. Die erfindungsgemäße Vorrichtung zeichnet sich dabei durch die im Folgenden aufgeführten Merkmale des Pixels aus.

Erfindungsgemäß besteht das mindestens eine Pixel aus mindestens einem Subpixel. Nach einer bevorzugten Ausführungsform besteht das mindestens eine Pixel aus drei Subpixeln. Das Pixel kann eine Mehrzahl von Subpixeln funktionell und/oder konstruktiv zu einer übergeordneten Einheit zusammenfassen. Funktionell bedeutet, dass die Subpixel beispielsweise gemeinsam angesteuert werden, so dass von außen gesehen nur der Pixel das Signal aufnimmt und interpretiert. Konstruktiv bedeutet, dass die Subpixel so geometrisch ausgestaltet sind, dass sie als eindeutig zusammengehörig wahrgenommen werden, beispielsweise aufgrund einer entsprechenden Umfassung, Kennzeichnung oder dergleichen.

Das Subpixel umfasst eine so genannte "fluidische Kette" in Form einer Mehrzahl von "Kompartimenten". Diese Kompartimente dienen der diskreten (voneinander räumlich abgegrenzten) Aufbewahrung bestimmter, festgelegter und in flüssiger Form vorliegender Farben. Jedes der Kompartimente fasst also ein bestimmtes, von der Umgebung beispielsweise durch Wände abgegrenztes Volumen. Besonders bevorzugt besitzen alle Kompartimente der fluidischen Kette jeweils im Wesentlichen dasselbe Volumen. Mindestens eines der Kompartimente ist mit einer im Rahmen der Betriebstemperaturen stets in flüssiger Form vorliegenden Farbe gefüllt. Erfindungsgemäß können sowohl farbpartikelbehaftete Trägerflüssigkeiten als auch in Trägerflüssigkeit gelöste Farbpigmente zum Einsatz kommen. Bevorzugt sind solche Farben bzw. Farbflüssigkeiten, die einen möglichst großen Temperaturbereich, insbesondere einen Temperaturbereich von ca. -20 bis +50 Grad Celsius abdecken, ohne dass die (Träger-)Flüssigkeit gefriert bzw. siedet. Außerdem sind solche Farben bzw. Farbflüssigkeiten bevorzugt, in denen sich die Farbpartikel nicht oder nur sehr langsam sedimentieren (z.B. länger als 1 Jahr). Vereinfachend wird im Folgenden lediglich von "Farben" gesprochen. Erfindungsgemäß ist es vorgesehen, dass diese Farben in Kanälen, die die einzelnen Kompartimente fluidisch miteinander zu einer Reihe (fluidischen Kette) verbinden, transportierbar sind. Erfindungsgemäß ist es außerdem vorgesehen, dass die fluidische Kette weiter ein Bildkompartiment umfasst. Dieses Bildkompartiment besitzt besonders bevorzugt ebenfalls dasselbe Volumen wie die übrigen Kompartimente und dient ebenfalls der Aufnahme eines abgegrenzten Volumens von Farbe. Es unterscheidet sich jedoch in seiner Funktion von den übrigen Kompartimenten dahingehend, als dass sein Inhalt durch ein dafür vorgesehenes Fenster (Subpixelbildfenster) von einem außenstehenden Betrachter aus sichtbar ist, wohingegen der Inhalt der übrigen Kompartimente vor diesem Betrachter erfindungsgemäß verborgen bleibt. Das Subpixelbildfenster kann dabei auf verschiedene Arten gebildet werden. Nach einer besonders bevorzugten Ausführungsform ist ein das Subpixel umgebendes oder dieses bildendes Gehäuse aus einem für das menschliche Auge nicht transparenten Material beschaffen, wohingegen auf der Seite des Gehäuses, welche sich zwischen dem Bildkompartiment und dem Betrachter befindet, ein solches Material verwendet wird, welches für das menschliche Auge völlig oder zumindest für die anzuzeigende Wellenlänge im Wesentlichen transparent ist. Nach einer weiteren Ausführungsform besteht das Subpixelbildfenster lediglich aus einer Öffnung im es umgebenden Gehäuse. In diesem Fall ist es jedoch im Normalfall nötig, an anderer Stelle dafür zu sorgen, dass der Inhalt des Bildkompartiments nicht mit der Umgebung in Kontakt gelangen kann.

Da das Bildkompartiment Bestandteil des erfindungsgemäß mindestens einen Subpixels ist, welcher seinerseits Bestandteil des erfindungsgemäß mindestens einen Pixels ist, muss dafür Sorge getragen werden, dass der Inhalt des Bildkompartiments nicht nur durch das Subpixel hindurch, sondern analog hierzu auch durch das Pixel hindurch von einem Betrachter aus sichtbar ist. Daher ist die erfindungsgemäße Vorrichtung weiterhin **dadurch gekennzeichnet, dass** das mindestens eine Pixel ein Pixelbildfenster umfasst, durch welches im Wesentlichen nur das bzw. die jeweiligen Subpixelbildfenster sichtbar sind. Sofern ein Abschluss gegenüber der Außenwelt bereits mittels einer transparenten Wand bzw. Decke des Subpixelbildfensters erreicht worden ist, ist es erfindungsgemäß nicht mehr nötig, dass das Pixelbildfenster überhaupt aus Material besteht; es ist bereits ausreichend, ein das Pixel bildendes Gehäuse an der entsprechenden Stelle einfach offen zu lassen. In bestimmten Fällen kann es jedoch nötig sein, dass das Pixelbildfenster aus transparentem Material besteht, nämlich insbesondere dann, wenn das Pixelbildfenster lediglich aus einer Öffnung besteht.

Erfindungsgemäß ist es außerdem vorgesehen, dass die Vorrichtung Mittel zum Transport der Farben umfasst. Dieses Mittel zum Transport ist nötig, um die in den einzelnen Kompartimenten vorhandenen Farben innerhalb der fluidischen Kette zu transportieren. Da einerseits immer nur diejenige Farbe von einem Betrachter aus sichtbar ist, die sich im Bildkompartiment befindet, die Anzeige andererseits jedoch bevorzugt der Darstellung mehrerer (mindestens zweier) Farben dient (als Farben zählen beispielsweise auch Schwarz und Weiß bzw. Transparent), müssen die gewünschten Farben in das Bildkompartiment hinein bzw. wieder aus diesem hinaus transportierbar oder förderbar sein. Das Mittel zum Transport muss sich erfindungsgemäß fluidisch in Reihe mit den Kompartimenten und dem Bildkompartiment des Subpixels befinden, also Teil der fluidischen Kette sein. Es kann je nach Bedarf uni- oder bidirektional wirken, also der Förderung in eine oder zwei Richtungen dienen. Je nach Bedarf können innerhalb eines Subpixels mehrere Mittel zum Transport vorgesehen sein; bevorzugt ist jedoch nur ein Mittel zum Transport vorhanden (und auch notwendig). Von der Stelle aus, an welcher es sich in der fluidischen Kette befindet, wirkt es in die Förderrichtung mittels einer Druckerhöhung (pumpend), oder alternativ oder zusätzlich in die andere Richtung druckmindernd (saugend). Da sich zwischen den einzelnen Kompartimenten keine größeren, komprimierbaren bzw. expandierbaren Gasvolumina befinden, resultiert eine durch das Mittel zum Transport hervorgerufene und an einer beliebigen Stelle der fluidischen Kette eingebrachte Druckerhöhung in einer Förderung der einzelnen Volumina der Farben in diese Richtung, wobei die einzelnen Farben unter fortlaufender gegenseitiger Trennung von einem Kompartiment zu dem nächsten wechseln. Aufgrund der Druckminderung auf der der Förderichtung abgewandten, anderen Seite des Mittels zum Transport werden die entsprechenden Volumina in Richtung des Mittels zum Transport bzw. durch dieses hindurch gefördert.

Als Mittel zum Transport kommen grundsätzlich alle Vorrichtungen in Frage, die zum Fördern insbesondere geringer Flüssigkeitsmengen geeignet sind. Bevorzugt sind hierbei jedoch Vorrichtungen, die aus der Gruppe umfassend Flüssigkeitspumpen und Elektrobenetzung stammen. Besonders bevorzugt sind dabei Piezomembranpumpen und außerdem so genannte Gasblasenpumpen, bei welchen die Pumpbewegung mittels eines aufgrund starker Erhitzung siedenden und dadurch ausdehnenden Flüssigkeitsvolumens in Verbindung mit Rückschlagventilen hervorgerufen wird. Ebenfalls besonders bevorzugt sind weiter Pumpvorrichtungen, die nach dem Prinzip der Elektrobenetzung arbeiten, nach welchem Flüssigkeiten manipuliert werden können, deren Oberflächenenergie in einem elektrischen Feld veränderbar ist, so dass sich durch Anlegen dieses elektrischen Feldes an bestimmte Regionen der in Tropfenform vorliegenden Flüssigkeiten diese in ihrer Form ändern und in Richtung des elektrischen Feldes bewegt werden können.

Nach einer bevorzugten Ausführungsform der Erfindung und für den Fall, dass der mindestens eine Pixel aus mehr als einem Subpixel besteht, umfasst mindestens einer der Subpixel ein eigenes Mittel zum Transport der Farben. Besonders bevorzugt umfasst jeder der Subpixel ein eigenes Mittel zum Transport. Bei einer entsprechend größeren Anzahl von Subpixeln umfasst die Vorrichtung eine entsprechende Anzahl von Mitteln zum Transport. Es ist erfindungsgemäß jedoch auch möglich, dass nicht alle Subpixel ein eigenes Mittel zum Transport umfassen müssen.

Nach einer weiteren bevorzugten Ausführungsform umfasst mindestens eines der Pixel mindestens ein Mittel zum Transport der Farben sowie ein Mittel zur Wahl des Subpixels. Mit anderen Worten, das Mittel zum Transport der Farben ist nun erfindungsgemäß nicht in einem oder mehreren der Subpixel vorhanden, sondern dem übergeordneten und diese zumindest funktionell zusammenfassenden Pixel zugeordnet. Auf diese Weise ist es möglich, mehrere Subpixel mit einer geringeren Anzahl von Mitteln zum Transport anzusteuern. Aus diesem Grund ist es erfindungsgemäß notwendig, zusätzlich ein Mittel zur Wahl des Subpixels bereitzustellen. Über dieses Mittel zur Wahl ist es möglich, dasjenige Subpixel auszuwählen, in welchem die Farben transportiert werden sollen. Es kann dabei auch möglich sein, dass mehrere der Subpixel eines Pixels parallel, also gleichzeitig von dem einen im Pixel vorhandenen Mittel zum Transport der Farben angesteuert werden. Es ist ebenfalls möglich, dass ein Pixel mehrere Mittel zum Transport umfasst, jedoch weniger als jeweils Subpixel im Pixel vorhanden sind. Besonders bevorzugt umfasst jedes Pixel jedoch genau ein Mittel zum Transport der Farben und genau ein Mittel zur Wahl des Subpixels.

Nach einer weiteren bevorzugten Ausführungsform umfasst die erfindungsgemäße Vorrichtung genau ein Mittel zum Transport der Farben sowie ein Mittel zur Wahl des jeweiligen Pixels und/oder Subpixels. Nach dieser Ausführungsform ist es also erfindungsgemäß vorgesehen, dass die gesamte Vorrichtung (Display) nur ein einziges Mittel zum Transport der Farben umfasst. Daher muss es erfindungsgemäß auch möglich sein, das entsprechende Pixel beziehungsweise Subpixel, in welchem die Farben transportiert werden sollen, separat oder gruppenweise anzusteuern. Hierfür ist erfindungsgemäß ein Mittel zur Wahl des jeweiligen Pixels und/oder Subpixels vorzusehen. Es kann dabei erfindungsgemäß auch sinnvoll sein, mehr als ein Mittel zur Wahl des Pixels vorzusehen, indem beispielsweise jeweils eine gewisse Anzahl von Pixeln zu einem Block zusammengefasst wird, welcher jeweils nur ein einziges Mittel zum Transport der Farben und zur Wahl des Pixels bzw. Subpixels des jeweiligen Blockes umfasst.Nach einer bevorzugten Ausführungsform der Vorrichtung ist die Form der Kompartimente der fluidischen Kette **dadurch gekennzeichnet, dass** der Querschnitt durch jeweils ein Kompartiment und/oder Bildkompartiment mindestens in einer Schnittebene ellipsenförmig, ellipsenähnlich oder abgerundet ist, und sich der Querschnitt in Richtung des jeweils benachbarten Kompartiments verjüngt. Diese mindestens eine Schnittebene muss sich dabei entlang der Längsachse des jeweiligen Kompartiments erstrecken. Insofern kommen beispielsweise Schnittebenen infrage, die sich durch eine Draufsicht oder aber eine Seitenansicht der fluidischen Kette beziehungsweise des jeweiligen Kompartiments ergeben.

Nach einer besonders bevorzugten Ausführungsform besitzt das jeweilige Kompartiment in beiden der eben beschriebenen Schnittebenen die genannte bevorzugte Querschnittsform. Eine Schnittansicht, welche senkrecht auf der Längsachse eines Kompartiments ausgerichtet wäre, würde dann im Wesentlichen einen spiegelsymmetrischen oder rotationssymmetrischen Querschnitt zeigen.

Am meisten bevorzugt ist dabei jeweils die ellipsenförmige oder ellipsenähnliche Querschnittsform.

Nach einer weiteren bevorzugten Ausführungsform werden die einzelnen Kompartimente bzw. das Bildkompartiment dadurch gebildet, dass ein Kanal mit im Wesentlichen ebenen Seitenwänden an mindestens zwei gegenüberliegenden Seiten periodische Verjüngungen (Einschnürungen) aufweist, die den Kanal verjüngen. Die Form dieser Verjüngungen kann erfindungsgemäß sowohl scharfkantig als auch abgerundet sein. Es sind sowohl eher stiftförmige, kleinvolumige, als auch eher prismen- oder rechteckförmige, großvolumige Einschnürungen möglich. Die Einschnürungen können außerdem derartig geformt sein, dass sie die Bewegung der Farben in eine Richtung (Vorzugsrichtung) begünstigen, in eine andere Richtung (Hemmrichtung) erschweren. Derartige Formen können beispielsweise in Vorzugsrichtung geneigte dreieckige Querschnitte aufweisen, oder entsprechend geneigte Bogensegmentsquerschnitte besitzen.

In einer Ausführungsform besitzt jedes Kompartiment vier Seitenwände, die es seitlich beziehungsweise nach oben und unten hin begrenzen. Es ist dabei möglich, dass die periodischen Einschnürungen an genau zwei gegenüberliegenden Seitenwänden, oder an drei oder allen vier Seitenwänden vorhanden sind. Es kann erfindungsgemäß in einer anderen Ausführungsform jedoch auch vorgesehen sein, dass das Kompartiment keinen im Wesentlichen rechteckigen, sondern beispielsweise einen runden oder ovalen Querschnitt aufweist. In diesem Fall verlaufen die periodischen Einschnürungen jeweils bevorzugt entlang des gesamten Umfangs des jeweiligen Kompartiments.

Bevorzugt verkleinern die erfindungsgemäßen Verjüngungen den Querschnitt des jeweiligen Kompartiments um mindestens 5% und höchstens 30%.

Ebenfalls bevorzugt beträgt die jeweilige Länge einer Verjüngung entweder nicht mehr als 100 µm oder mindestens 20% der Länge des Kompartiments. Im erstbeschriebenen Fall sind die entsprechenden Verjüngungen also lediglich angedeutet, können aber gegebenenfalls ausreichen, um ein Kompartiment von einem nächsten Kompartiment abzugrenzen.

Wie bereits eingangs erwähnt, umfasst jede fluidische Kette der erfindungsgemäßen Vorrichtung mindestens zwei Farben, wobei definitionsgemäß auch die Farben Schwarz, Weiß bzw. Transparent als Farben im Sinne der Erfindung anzusehen sind. Um einen möglichst großen Farbraum abzudecken, existieren bestimmte Kombinationen mehrerer Farben, die besonders bevorzugt in den Kompartimenten einer fluidischen Kette vorgehalten werden sollten. Die Reihenfolge der Farben innerhalb eines erfindungsgemäß bevorzugten Musters ist prinzipiell zwar beliebig; besonders bevorzugt ist sie jedoch über alle Subpixel eines Displays immer gleich.

Grundsätzlich können die Kompartimente des mindestens einen Subpixels Farben umfassen, welche nach dem Muster Rot-Grün-Blau oder Cyan-Magenta-Gelb festgelegt sind.

Zusätzlich ist für eine farbtreue Darstellung im Allgemeinen erforderlich, das beschriebene Muster zusätzlich durch die (unbunten) Farben Schwarz und/oder Weiß zu ergänzen.

Besonders bevorzugt umfasst daher eine einzige fluidische Kette der erfindungsgemäßen Vorrichtung ein Muster, welches die Farben Rot, Grün, Blau, Cyan, Magenta, Gelb, Schwarz, Weiß umfasst.

Unter Verwendung eines erfindungsgemäß beschriebenen Farbmusters in einer einzigen fluidischen Kette ist es möglich, einen besonders großen Farbraum insbesondere dann abzudecken, wenn die Farben mehrerer Subpixel optisch zu einer einzigen Farbe zusammengefasst werden (verschmelzen). Daher bestehen bestimmte, besonders bevorzugte geometrische Anordnungen von Subpixeln beziehungsweise Pixeln, die diesen erfindungsgemäß vorgesehenen Eindruck entstehen lassen. Somit sind durch Verwendung einer Vielzahl von Pixeln Displays möglich, die Bilder und dergleichen mit einer hohen Farb-und/oder Strukturauflösung darstellen können.

Nach einer ersten Ausführungsform der erfindungsgemäßen Vorrichtung sind die Subpixelbildfenster jeweils eines Pixels derart bemessen und angeordnet, dass sie jeweils übereinander und gleichzeitig innerhalb des Pixelbildfensters liegen. Die Subpixelbildfenster müssen dabei bis auf das unterste so beschaffen sein, dass durch sie nicht nur das jeweilige Bildkompartiment des Subpixels zeigen, sondern auch den Blick auf die darunter liegenden Bildkompartimente des oder der übrigen Subpixel erlauben. Es ist erfindungsgemäß notwendig, dass die in den fluidischen Ketten verwendeten Farben transluzent, also nicht vollständig deckend sind, da ansonsten die Farbe des jeweils oben liegenden Bildkompartiments die einzige von einem Betrachter aus sichtbare Farbe wäre, es sei denn, der Inhalt des obenliegenden Bildkompartiments wäre leer oder transparent.

Besonders bevorzugt befindet sich unterhalb des untersten Subpixelfensters noch ein Mittel zur Beleuchtung, welches aktiv, beispielsweise eine Glühlampe oder eine Leuchtdiode, oder passiv, beispielsweise eine Außenlicht reflektierende Fläche, sein kann.

Nach einer zweiten Ausführungsform der erfindungsgemäßen Vorrichtung sind die Subpixelbildfenster jeweils eines Pixels derart bemessen und angeordnet, dass sie direkt nebeneinander und innerhalb des Pixelbildfensters liegen. Direkt nebeneinander bedeutet, dass aus einem normalen Betrachtungsabstand der Eindruck entsteht, dass die Inhalte der nebeneinander liegenden Subpixelbildfenster optisch miteinander verschmelzen, so dass daraus ein entsprechender Misch-Farbeindruck entsteht. Bevorzugterweise sind die Subpixel dabei so ausgestaltet, dass sie eine möglichst gute Annäherung insbesondere im Bereich der Subpixelbildfenster ermöglichen.

Bevorzugte Anordnungsformen der Subpixel können die Anordnung in parallel verlaufenden Streifen, oder auch die Anordnung in einem bevorzugt regelmäßig geformten Mehreck sein. Im letzteren Fall liegen die Subpixelbildfenster bevorzugt im bzw. nahe am Zentrum des Mehrecks.

In jedem Fall ist das Pixelbildfenster des erfindungsgemäßen Pixels so angeordnet und bemessen, dass es alle Subpixelbildfenster des jeweiligen Pixels umfasst.

Nach einer bevorzugten Ausführungsform der erfindungsgemäßen Vorrichtung verlaufen wesentliche Teile der fluidischen Kette in einem Doppelstrang. Das bedeutet, dass die fluidische Kette im Wesentlichen aus zwei Teilen (Teilsträngen) besteht, die nicht zwangsläufig, aber bevorzugt im Wesentlichen linear, in jedem Fall aber im Wesentlichen parallel zueinander verlaufen. Erfindungsgemäß ist es notwendig, dass diese beiden Stränge fluidisch miteinander verbunden sind, da es sich ansonsten nicht um eine zusammenhängende fluidische Kette handeln würde. Diese Verbindung wird erfindungsgemäß durch ein Verbindungskanalstück hergestellt, welches an dem einen oder an dem anderen Ende des Doppelstrangs angeordnet ist, so dass sich eine offene fluidische Kette bildet. Das Verbindungskanalstück kann jedoch auch an beiden Enden angeordnet sein, so dass sich eine geschlossene fluidische Kette bildet (fluidischer Kreislauf).

Besonders bevorzugt ist das Bildkompartiment der fluidischen Kette an einem Ende des Doppelstrangs angeordnet. Am meisten bevorzugt kann sich die Position des zuvor beschriebenen Verbindungskanalstücks mit der Position des Bildkompartiments decken bzw. beide Funktionen werden von dem gleichen Bauelement erfüllt.

Am meisten bevorzugt ist eine Ausführungsform, nach der die Teilstränge linear verlaufen und an beiden Enden fluidisch miteinander verbunden sind, so dass sich ein fluidischer Kreislauf ergibt, und bei welcher außerdem eine dieser beiden Verbindungen gleichzeitig das Bildkompartiment beinhaltet.

Nach einer anderen Ausführungsform der erfindungsgemäßen Vorrichtung wird das Subpixelbildfenster dadurch gebildet, dass auf der einem Betrachter zugewandten Seite mindestens ein weiteres Subpixel alle außerhalb des Subpixelbildfensters liegenden Bereiche verdeckt. Das bedeutet, dass beispielsweise das unten liegende Subpixel vollständig transparent sein kann, dass jedoch aufgrund des darüber liegenden Subpixels, welches dann nicht transparent sein darf, alle die Bereiche des unten liegenden Subpixels verdeckt werden, die von einem Betrachter aus nicht sichtbar sein sollen. Das Subpixelbildfenster wird dementsprechend nicht durch bestimmte konstruktive Merkmale des entsprechenden Subpixels, sondern durch die Positionierung des entsprechenden Subpixels im Verhältnis zu seiner Umgebung gekennzeichnet.

Nach einer alternativen Ausführungsform werden die entsprechend vor einem Betrachter verdeckten Bereiche des Subpixels mittels einer Abdeckung abgeschirmt. Diese Abdeckung kann beispielsweise durch eine Färbung der Außenfläche, durch zusätzliche Teile wie Folien oder Platten oder andere konstruktive Elemente hergestellt werden.

Bei einer Anordnung von zwei oder mehr Subpixeln entsteht so von der Seite gesehen eine Kaskade. Bevorzugt sind jeweils drei Subpixel zu einer Kaskade, die dann auch ein Pixel darstellt, zusammengefasst. Insbesondere bei extrem dünnen Subpixeln können jedoch auch mehr als diese drei Subpixel zu Pixeln zusammengefasst und/oder zu einer Kaskade übereinander geschichtet werden.

Für den Fall, dass die fluidische Kette innerhalb eines Subpixels in Form eines Doppelstrangs vorliegt, und bei dem sich das Bildkompartiment an einem Ende dieses Doppelstrangs befindet, ist es nach einer besonders bevorzugten Ausführungsform vorgesehen, dass das Subpixelbildfenster bzw. das Bildkompartiment außerdem derart angeordnet ist, dass die übrigen Kompartimente des Subpixels aus Richtung eines Betrachters gesehen unterhalb des am einen Ende des Doppelstranges befindlichen Subpixelbildfensters angeordnet sind, so dass sie von diesem verdeckt werden. Am meisten bevorzugt ist dabei eine im Wesentlichen vertikale Ausrichtung des Doppelstrangs, mit dem Bildkompartiment an dem nach oben beziehungsweise in Richtung des Betrachters weisenden Ende. Gleichzeitig sind die Maße des Subpixelbildfensters so bemessen, dass die darunter angeordneten beiden Teilstränge vollständig von Subpixelbildfenster verdeckt werden.

Nach einer weiteren bevorzugten Ausführungsform, die mindestens zwei erfindungsgemäße Pixel umfasst, sind diese mindestens zwei Pixel derart übereinander angeordnet, dass nur das jeweilige Pixelbildfenster von einem Betrachter aus sichtbar ist. Dieser Aufbau entspricht im Wesentlichen dem Kaskadenaufbau aus Subpixeln; es entsteht demnach eine Kaskade aus Pixeln. Die Anzahl der übereinander stapelbarer Pixel ist dabei von der Dicke der jeweiligen Pixeln, gesehen aus Richtung eines Betrachters, abhängig. Analog zu dem Subpixel-Kaskadenaufbau entsteht auch hier das Pixelbildfenster lediglich dadurch, dass die übrigen Teile des jeweiligen Pixels durch den darüber liegenden Pixel verdeckt werden. Nach einer alternativen Ausführungsform kann dieses Verdecken auch durch eine Abdeckung erfolgen.

Nach einer anderen Ausführungsform, für die sowohl die nebenals auch übereinander liegende Aufbauvariante von Subpixeln infrage kommt, sind mindestens zwei Pixel derart nebeneinander angeordnet, dass nur das jeweilige Pixelbildfenster von einem Betrachter aus sichtbar ist. Die Pixel sind dementsprechend im Wesentlichen aus Richtung eines Betrachters gesehen vertikal angeordnet. Besonders bevorzugt sind dann auch die entsprechenden Subpixel im Wesentlichen vertikal angeordnet. Dadurch wird erreicht, dass die unterhalb der jeweiligen Bildkompartimente liegenden Teile der Subpixel von einem Betrachter ausgesehen nicht sichtbar sind, da sie von dem Bildkompartiment verdeckt werden.

Allgemein formuliert, entspricht nach dieser besonders bevorzugten Ausführungsform die aus Richtung eines Betrachters sichtbare Subpixelbildfläche im Wesentlichen der aus der gleichen Richtung gesehenen gesamten Querschnittsfläche des Bildkompartiments und/oder des Doppelstrangs. Die Querschnittsflächen können dabei jeweils sowohl rund als auch eckig sein, wobei eine im Wesentlichen quadratische Form besonders bevorzugt ist. Vorteilhaft ist in jedem Fall eine ungefähre Kongruenz der beiden Querschnittsflächen. Ebenfalls vorteilhaft ist es, wenn die Größe des Bildkompartiments im Wesentlichen der Größe des Subpixelbildfensters entspricht, da so eine optimale Ausnutzung der zur Verfügung stehenden Bildfläche der Pixel und somit des Displays gewährleistet ist.

Eine weitere Ausführungsform der Erfindung sieht vor, dass das entsprechende Bildkompartiment eines Subpixels mindestens in einer Raumrichtung ellipsenförmig, ellipsenähnlich oder abgerundet ist und außerdem im Wesentlichen das gleiche Volumen wie eines der übrigen Kompartimente der jeweiligen fluidischen Kette aufweist. Durch die weitgehende Identität der einzelnen Volumina wird sichergestellt, dass jedes der Kompartimente, sofern sich ein Farbtropfen darin befindet, auch vollständig und nicht etwa nur teilweise von diesem ausgefüllt ist. Es ist außerdem sichergestellt, dass Lücken, die beispielsweise aus einer Trägerflüssigkeit oder Gas bestehen können, auch beim Transport der Farben durch die fluidische Kette bestehen bleiben, da in keinem Kompartiment ausreichend Platz für einen Farbtropfen und eine größere Menge an Gas oder gar zwei Farbtropfen ist. Dadurch wird auch der Gefahr einer Vermischung von Farbtropfen untereinander und/oder Trägerflüssigkeit beziehungsweise Gas entgegengewirkt.

Es ist erfindungsgemäß von Vorteil, wenn die Position bestimmter Farben in den Kompartimenten der fluidischen Kette eines erfindungsgemäßen Subpixels bekannt ist. Dementsprechend müssen Mittel vorgesehen sein, die es ermöglichen, die Lage einer bestimmten Farbe und/oder eines anderen Hilfsmittels, welches dieser Lage eindeutig kennzeichnet, zu bestimmen. Hierzu sind erfindungsgemäß besonders bevorzugt zwei Ausführungsformen der Vorrichtung vorgesehen, die einzeln oder auch gemeinsam eingesetzt werden können. Zur Vereinfachung wird im Folgenden das Bildkompartiment als Untermenge der übrigen Kompartimente einer fluidischen Kette angesehen und dementsprechend ebenfalls lediglich mit dem Ausdruck "Kompartiment" bezeichnet.

Nach einer ersten Ausführungsform sind die einzelnen Farben in den Kompartimenten derart angeordnet, dass sich zwischen den Kompartimenten, welche Farben enthalten, mindestens eine Lücke ersten Umfangs mit einer bestimmten Anzahl von Kompartimenten, welche keine Farben enthalten, befindet. Außerdem existiert genau eine Lücke zweiten Umfangs, die eine von der Lücke ersten Umfangs verschiedene Anzahl von Kompartimenten, die keine Farbe enthalten, umfasst. Mit anderen Worten, es existiert exakt eine Lücke zweiten Umfangs, die beispielsweise den Anfang beziehungsweise das Ende der festgelegten Folge von Farben (Muster) anzeigt. Um diese Lücke zweiten Umfangs zu detektieren, ist es erfindungsgemäß außerdem vorgesehen, dass Mittel zur Detektion dieser Lücke zweiten Umfangs vorhanden sind.

Die Lücke ersten Umfangs kann dabei bevorzugt jeweils ein Kompartiment umfassen. Besonders bevorzugt jedoch umfasst diese überhaupt kein Kompartiment, was damit gleichbedeutend ist, dass das Mittel zur Detektion lediglich eine Unterbrechung in der Farbfolge der Farben detektieren muss, die in den ansonsten direkt aufeinander folgenden, mit Farbe gefüllt Kompartimenten existiert. Die Lücke zweiten Umfangs umfasst bevorzugt gerade ein Kompartiment mehr als die Lücke ersten Umfangs, um die Anzahl der nicht besetzten Kompartimente innerhalb einer fluidischen Kette möglichst gering zu halten.

Besonders bevorzugt ist das Mittel zur Detektion der Lücke zweiten Umfangs so ausgewählt, dass es Effekte aus der Gruppe umfassend kapazitive, induktive, optische und/oder resistive Effekte detektieren kann. Ein kapazitiv arbeitendes Mittel zur Detektion kann beispielsweise an den Rändern eines ausgewählten Kompartiments der fluidischen Kette Elektroden bereitstellen, an die eine Spannung angelegt wird. Bei Vorhandensein einer Flüssigkeit, deren dielektrische Konstante eine andere als die eines leeren Kompartiments ist, ändert sich das elektrische Feld zwischen den Elektroden, so dass diese Änderung detektiert werden kann. Ein optisch arbeitendes Mittel zur Detektion kann beispielsweise die Lichtabsorption einer Flüssigkeit, die in ein zuvor leeres Kompartiment eindringt, detektieren. Ein resistiv arbeitendes Mittel zur Detektion kann mittels zweier Elektroden, welche in das Innere eines Kompartiments hineinragen, die Widerstandsänderung detektieren, welche sich zwischen einem leeren bzw. mit Trägerflüssigkeit gefüllten und einem mit Farbe gefüllten Kompartiment ergibt.

Im Hinblick auf die oben erwähnten Lücken ersten beziehungsweise zweiten Umfangs ist es dementsprechend bevorzugt, wenn die Anzahl der Kompartimente inklusive dem Bildkompartiment gerade der doppelten Anzahl der Farben plus 1 entspricht. Bei Anwendung dieser Formel erhält man eine fluidische Kette, in der sich jeweils ein gefülltes und ein leeres Kompartiment abwechseln, und an genau einer Stelle eine Lücke aus zwei leeren Kompartimenten entsteht.

Die ebenfalls oben erwähnte andere bevorzugte Ausführungsform, nach welcher alle Kompartimente bis auf eines mit Farben gefüllt sind, lässt sich auch dadurch ausdrücken, dass die Anzahl der Kompartimente inklusive dem Bildkompartiment gerade der einfachen Anzahl der Farben plus 1 entspricht.

Wie außerdem oben erwähnt, existiert eine weitere besonders bevorzugte Ausführungsform, welche ebenfalls die Erkennung der Lage einer bestimmten Farbe innerhalb der fluidischen Kette ermöglicht. Dementsprechend ist es vorgesehen, dass die Vorrichtung außerdem oder alternativ zum Mittel zur Detektion der Lücke zweiten Umfangs auch Mittel zur Detektion mindestens einer der Farben umfasst. Durch Detektion einer bestimmten Farbe, welche in der fluidischen Kette vorhanden ist, lässt sich auch die Position alle anderen Farben bestimmen, sofern die Reihenfolge dieser Farben beispielsweise durch den Herstellprozess eindeutig festgelegt worden ist. Dieses Mittel zur Detektion mindestens einer der Farben kann beispielsweise die Wellenlänge von Licht bestimmen, welches durch das entsprechende Kompartiment dringt, das mit dem Mittel zur Detektion mindestens einer der Farben verbunden ist. Sofern die in der fluidischen Kette vorhandenen Farben unterschiedliche elektrische Widerstände besitzen, kann auch eine entsprechende Widerstandsmessung zur Detektion einer bestimmten Farbe herangezogen werden.

Durch Verwendung eines Mittels zur Detektion mindestens einer der Farben kann besonders bevorzugt auch auf das Vorhandensein einer oder mehrer Lücken, also mit keiner Farbe gefüllten Kompartimenten, verzichtet werden, da diese Lücke(n) zur Feststellung der Position der Farben innerhalb der fluidischen Kette nicht mehr nötig ist bzw. sind.

Außerdem ist es erfindungsgemäß bevorzugt vorgesehen, dass die Vorrichtung zusätzlich oder alternativ Mittel zum Speichern und Abrufen der Lage der Lücke zweiten Umfangs bzw. der Lage mindestens einer der Farben umfasst. Dadurch wird es möglich, jederzeit Information über die entsprechende Lage der fluidischen Kette innerhalb des Subpixels abzurufen und beispielsweise an eine übergeordnete Steuerung weiterzugeben. Dies ist insbesondere dann notwendig, wenn zur Anzeige einer bestimmten Farbe, die in der fluidischen Kette vorhanden ist, nicht jedes Mal eine neue Initialisierung der Kette durchgeführt werden soll, sondern direkt und auf dem kürzesten Wege diejenige Farbe in das Bildkompartiment gefördert werden soll, welche dort beispielsweise aufgrund des Signals einer übergeordneten Steuerung gewünscht wird.

Daher ist es nach einer bevorzugten Ausführungsform der erfindungsgemäßen Vorrichtung vorgesehen, dass diese weiter eine Ansteuereinheit zur Aufbereitung des darzustellenden Bildes und zur Weiterleitung an die Pixel und/oder Subpixel umfasst. Anders ausgedrückt, empfängt die Ansteuereinheit Informationen über das darzustellende Bild und verteilt diese Informationen entsprechend aufbereitet an die Pixel und/oder Subpixel des Displays. Besonders bevorzugt besitzen jedoch die Pixel eigene, untergeordnete Ansteuereinheiten, welche selbsttätig die Anforderung, eine bestimmte Farbe darzustellen, in die entsprechenden Ansteuerimpulse für das bzw. die Mittel zum Transport umsetzen, ohne dass der übergeordneten Ansteuereinheit die genaue Zusammensetzung der einzelnen fluidischen Ketten bezüglich ihrer Farben bekannt sein muss. Ein Vorteil dieser dezentralen Informationsverarbeitung liegt darin begründet, dass die übergeordnete Ansteuereinheit von einem Großteil der Berechnungsaufgaben entlastet wird. Ein weiterer Vorteil besteht darin, dass bei einem Wechsel des Pixeltyps an einigen oder auch allen Stellen des Displays keine Änderung an der übergeordneten Ansteuerung notwendig ist, da letztere ohnehin keine Detailinformationen über das Innenleben der Pixel beziehungsweise Subpixel besitzt und besitzen muss.

Nach einer weiteren Ausführungsform umfasst jedes Pixel und/oder jedes Subpixel mindestens einen Identifizierer zur eindeutigen Unterscheidbarkeit desselben von allen anderen. Dieser Identifizierer kann beispielsweise eine RFID-Marke sein, oder ein Code, welcher auf Anforderung beispielsweise per Funk ausgesendet wird, und welcher mindestens innerhalb des gesamten Displays jeden Pixel eindeutig identifizierbar macht. Besonders bevorzugt jedoch ist dieser Identifizierer universell nutzbar, bezeichnet also innerhalb der gesamten, zum Einbau in ein erfindungsgemäßes Display infrage kommender Menge an Pixeln nur genau ein einziges dieser Pixel.

Ebenfalls bevorzugt ist, dass die erfindungsgemäße Vorrichtung eine Kommunikationseinheit zur uni- oder bilateralen Kommunikation mit der Ansteuereinheit umfasst. Mittels dieser Kommunikationseinheit ist es erfindungsgemäß möglich, Informationen zwischen der Ansteuereinheit und den einzelnen Pixeln und/oder Subpixeln auszutauschen.

Diese Kommunikationseinheit kann drahtgebundenen oder besonders bevorzugt drahtlos betrieben werden. Letztere Variante bietet den Vorteil, dass die ansonsten notwendige Vielzahl von einzelnen Steuerleitungen entfällt, und dass außerdem der Austausch eines defekten Pixels ohne entsprechende Verdrahtungsaufgaben schnell und einfach zu bewältigen ist.

Außerdem ist die erfindungsgemäße Vorrichtung **dadurch gekennzeichnet, dass** die fluidischen und/oder die elektronischen Komponenten der Pixel bzw. Subpixel im Wesentlichen aus Kunststoffen bestehen und mittels Massenfertigungsverfahren hergestellt werden können. Hierzu zählen beispielsweise der Spritzguss, Nanoimprintverfahren oder das Heißprägen. Weiter ist es bevorzugt, dass auch die elektronischen Komponenten mittels entsprechender Verfahren wie z.B. dem Aufdrucken elektronischer Komponenten auf Kunststoffsubstrate herstellbar sind.

Zusammenfassend besteht also die erfindungsgemäße Vorrichtung zur Anzeige farbiger Information (Farbdisplay) im Wesentlichen aus einer Mehrzahl von Pixeln, welche mindestens eines, einige, oder auch alle der oben aufgeführten Merkmale umfassen.

Nach einer anderen bevorzugten Ausführungsform ist die erfindungsgemäße Vorrichtung **dadurch gekennzeichnet, dass** die Subpixel und die Pixel aus einem flexiblen Material bestehen. Dadurch ist es erfindungsgemäß möglich, zumindest wesentliche Teile des Displays flexibel zu gestalten, so dass die Anzeigeelemente auf gewölbten Oberflächen wie beispielsweise Kfz-Armaturen oder Litfaßsäulen aufgebracht werden können. Besonders bevorzugt werden hierzu Kunststofffolien eingesetzt. Es muss dabei lediglich sichergestellt sein, dass auch bei Biegung des Anzeigeelementes jederzeit gewährleistet ist, dass die fluidischen Verbindungen zwischen den einzelnen Kompartimenten und dem Bildkompartiment ausreichend weit offen gehalten werden, so dass die Farben innerhalb der fluidischen Kette förderbar bleiben, und dass ggf. vorhandene elektronische Komponenten der Subpixel und Pixel ebenfalls biegbar ausgestaltet sind.Neben der erfindungsgemäßen, oben beschriebenen Vorrichtung umfasst die Erfindung auch ein Verfahren zur Anzeige von farbiger Information (Farbdisplay) unter Verwendung der entsprechenden Vorrichtung. Diese umfasst erfindungsgemäß mindestens einen einzelnen, in seiner Farbe variierbaren Bildpunkt (Pixel), wobei das Pixel aus mindestens einem Subpixel besteht, und wobei das Subpixel eine fluidische Kette in Form einer Mehrzahl von Kompartimenten zur diskreten Aufbewahrung bestimmter, festgelegter und in flüssiger Form vorliegender Farben umfasst, zwischen welchen diese Farben in Kanälen transportierbar sind, und wobei die fluidische Kette des jeweiligen Subpixels weiter ein Bildkompartiment mit Fenster (Subpixelbildfenster) umfasst, durch das ausschließlich der jeweilige Inhalt des Bildkompartiments von einem Betrachter aus erkennbar ist. Die Vorrichtung umfasst weiter mindestens ein Pixelbildfenster, durch welches im Wesentlichen nur das bzw. die jeweiligen Subpixelbildfenster sichtbar sind. Die Vorrichtung umfasst außerdem mindestens ein Mittel zum Transport der Farben.

Das erfindungsgemäße Verfahren umfasst dabei im Kern die folgenden Schritte:
- Zunächst wird die Lage mindestens einer der Farben in jedem Subpixel festgestellt.
- Anschließend wird die gewünschten Farbe in das Subpixelbildfenster unter Zuhilfenahme des mittels zum Transport der Farben gefördert.
   Umfasst die erfindungsgemäße Vorrichtung entsprechende Mittel zur Ansteuerung (Ansteuereinheit), so kann das erfindungsgemäße Verfahren außerdem noch folgenden Schritte umfassen:

- Zunächst erfolgt eine Feststellung derjenigen Farbkombination der Farben aller Subpixel eines Pixels, die einem gewünschten Farbeindruck am nächsten kommt. Der gewünschten Farbeindruck wird dabei von der übergeordneten Ansteuereinheit vorgegeben. Die Feststellung der entsprechenden Farbkombination innerhalb des Pixels kann dabei ebenfalls durch die übergeordnete Ansteuereinheit oder bevorzugt durch eine untergeordnete Ansteuereinheit, welche sich innerhalb des Pixels befindet beziehungsweise diesem zugeordnet ist, erfolgen.
- Anschließend erfolgt eine Förderung der gewünschten Farben in die jeweiligen Subpixelbildfenster des jeweiligen Pixels.
   Umfasst die erfindungsgemäße Vorrichtung zwecks Feststellen der Lage mindestens einer der Farben ein Mittel zur Detektion einer Lücke zweiten Umfangs, so werden zum Festellen der Lage mindestens einer der Farben folgende Prozesse gleichzeitig durchgeführt:

- Fördern der Farben
- Betreiben des Mittels zur Detektion einer Lücke zweiten Umfangs.
   Die Durchführung dieser Prozesse erfolgt solange, bis das Mittel zur Detektion einer Lücke zweiten Umfangs diese Lücke zweiten Umfangs detektiert.
   Für den Fall, dass die erfindungsgemäße Vorrichtung zwecks Feststellen der Lage mindestens einer der Farben alternativ oder zusätzlich zum zuvor beschriebenen Mittel zur Detektion einer Lücke zweiten Umfangs ein Mittel zur Detektion mindestens einer der Farben umfasst, werden zum Festellen der Lage mindestens einer der Farben folgende Prozesse gleichzeitig durchgeführt:
- Fördern der Farben
- Betreiben des Mittels zur Detektion mindestens einer der Farben
   Die Durchführung dieser Prozesse erfolgt wiederum solange, bis das Mittel zur Detektion mindestens einer der Farben diese bestimmte Farbe detektiert.
   Umfasst die erfindungsgemäße Vorrichtung außerdem Mittel zum Speichern und Abrufen der Lage der Lücke zweiten Umfangs bzw. der Lage mindestens einer der Farben, so geschieht das Feststellen der Lücke zweiten Umfangs und/oder der Lage mindestens einer der Farben dadurch, dass folgende Schritte durchgeführt werden:
- vor dem ersten Betrieb eines jeden Subpixels findet eine einmalige Initialisierung desselben statt;
- während des Betriebes, bei dem eine Positionsänderung der Lücke zweiten Umfangs und/oder der Lage mindestens einer der Farben notwendig ist, wird die sich daraus ergebende jeweilige neue Lage abgespeichert, so dass
- die jeweilige Lage vor einem erneuten Betrieb abgerufen werden kann bzw. abgerufen wird.

Die jeweilige Lage kann dabei beispielsweise durch die übergeordnete Ansteuereinheit oder, sofern vorhanden, die untergeordnete Ansteuereinheit des jeweiligen Pixels beziehungsweise Subpixels abgerufen werden, so dass die entsprechende Ansteuereinheit in die Lage versetzt wird, die jeweils kürzesten Transportwege zu bestimmen, der notwendig ist, um die gewünschten Farben in das jeweilige Bildkompartiment des entsprechenden Subpixels zu transportieren.

Die erfindungsgemäße Vorrichtung ermöglicht entsprechend den oben gemachten Angaben die Anzeige von farbigen Informationen unter der Verwendung einzelner Bildpunkte. Durch eine entsprechende Auswahl von farbigen sowie ggf. Trägerflüssigkeiten ist es erfindungsgemäß möglich, die Anzeige bei extrem niedrigen und auch ohne Temperaturen zu betreiben, ohne dass diese einfriert beziehungsweise siedet und dadurch stillsteht bzw. Schaden nimmt.

Zum Betrieb der erfindungsgemäßen Vorrichtung ist nur eine geringe Menge an Energie notwendig, da insbesondere bei der Anzeige statischer Informationen kein Transport der Farben erfolgt, so dass auch keine Energie zum Transport derselben vonnöten ist.

Durch den modularen Aufbau der Anzeige, also ihre Unterteilung in Subpixel beziehungsweise Pixel, ist es erfindungsgemäß leicht möglich, einzelne, beispielsweise defekte Subpixel beziehungsweise Pixel auszutauschen. Auf diese Art und Weise ist eine preisgünstige Reparatur der Anzeige sowie gegebenenfalls eine Anpassung oder Erweiterung um weitere Farben möglich, ohne das gesamte Anzeigeinstrument austauschen zu müssen.

Durch die erfindungsgemäß bevorzugte Verwendung von acht Farben in Verbindung mit einem optisch verursachten Farbmischeffekt ist ein Farbraum darstellbar, der zumindest zur Darstellung von typischerweise auf Werbeplakaten verwendeten Informationen ausreicht.

Schließlich bietet die erfindungsgemäße Vorrichtung bei Verwendung flexibler Substrate die Möglichkeit einer gewissen Flexibilität, so dass eine auf der Erfindung beruhende Anzeige zumindest in wesentlichen Teilen auf gewölbten Oberflächen anbringbar ist.

### Figurenübersicht

- Fig. 1: zeigt die erfindungsgemäße Vorrichtung, umfassend ein Pixel 10, ein Subpixel 20, sowie weitere Elemente.
- Fig. 2: zeigt die erfindungsgemäße Vorrichtung, im Wesentlichen umfassend ein Pixel 10, drei Subpixel 20, ein Mittel zum Transport 12 der Farben F sowie ein Mittel zur Wahl 13 des Subpixels 20.
- Fig. 3A: zeigt einen Teil einer fluidischen Kette mit ellipsenförmigen Kompartimenten 21 entsprechend der erfindungsgemäßen Vorrichtung in einer ersten Ansicht.
- Fig. 3B: zeigt eine erste Schnittansicht der in der Fig. 3A gezeigten fluidischen Kette entlang der Schnittkante A-A für den Fall von in zwei Schnittansichten ellipsenförmigen Kompartimenten 21.
- Fig. 3C: zeigt eine zweite Schnittansicht der in der Fig. 3A gezeigten fluidischen Kette entlang der Schnittkante A-A für den Fall von nur in einer Schnittansicht ellipsenförmigen Kompartimenten 21.

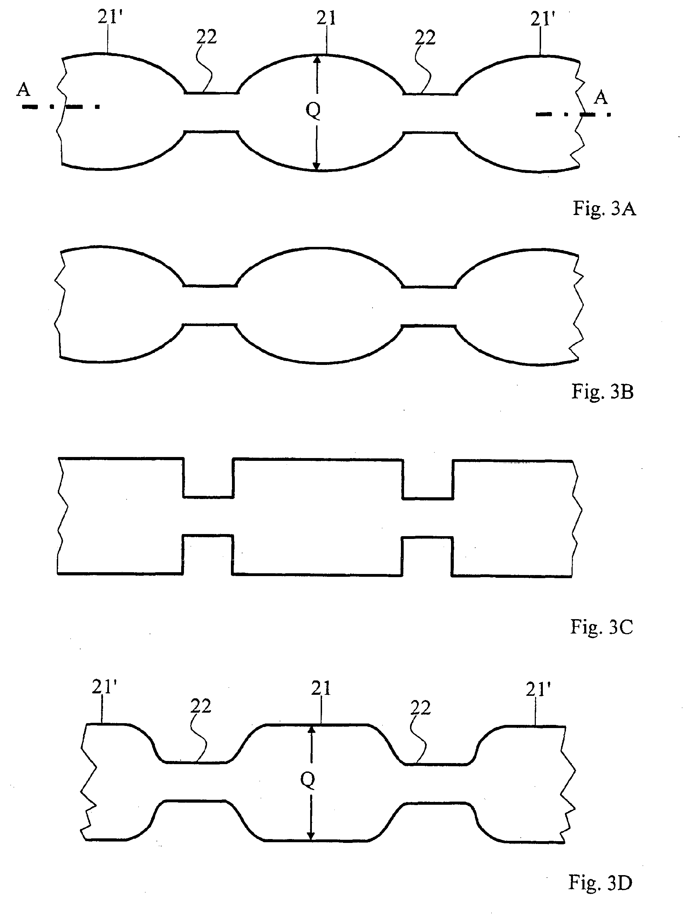

- Fig. 3A: zeigt einen Teil einer fluidischen Kette mit abgerundeten Kompartimenten 21 entsprechend der erfindungsgemäßen Vorrichtung.

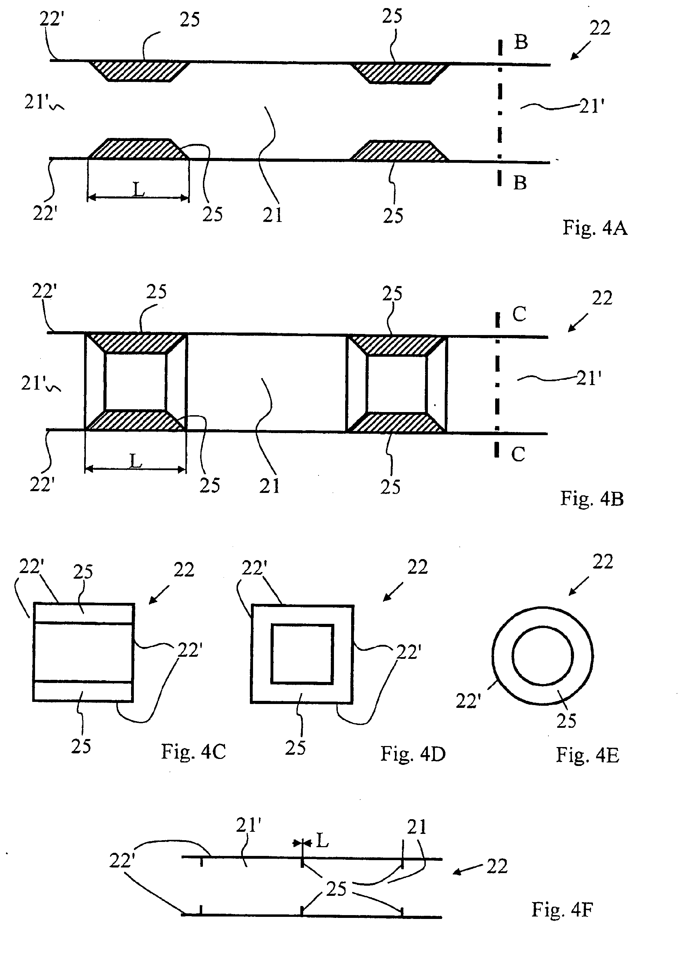

- Fig. 4A: zeigt einen Teil einer fluidischen Kette, deren Kompartimente 21,21' durch periodische Verjüngungen einer ersten Form von genau zwei gegenüberliegenden ebenen Seitenwänden 22' gebildet werden.
- Fig. 4B: zeigt einen Teil einer fluidischen Kette, deren Kompartimente (21) (21') durch periodische Verjüngungen einer ersten Form von allen vier ebenen Seitenwänden 22' gebildet werden, wie in Anspruch 7 genannt.
- Fig. 4C: zeigt eine Schnittansicht entlang der Schnittlinie B-B des in Fig. 4A gezeigten Teils der fluidischen Kette.
- Fig. 4D: zeigt eine Schnittansicht entlang der Schnittlinie C-C des in Fig. 4B gezeigten Teils der fluidischen Kette.
- Fig. 4E: zeigt einen Teil einer fluidischen Kette, deren Kompartimente (21) (21') durch periodische Verjüngungen einer zweiten Form an mindestens zwei gegenüberliegenden ebenen Seitenwänden 22' gebildet werden, wie in Anspruch 7 genannt.

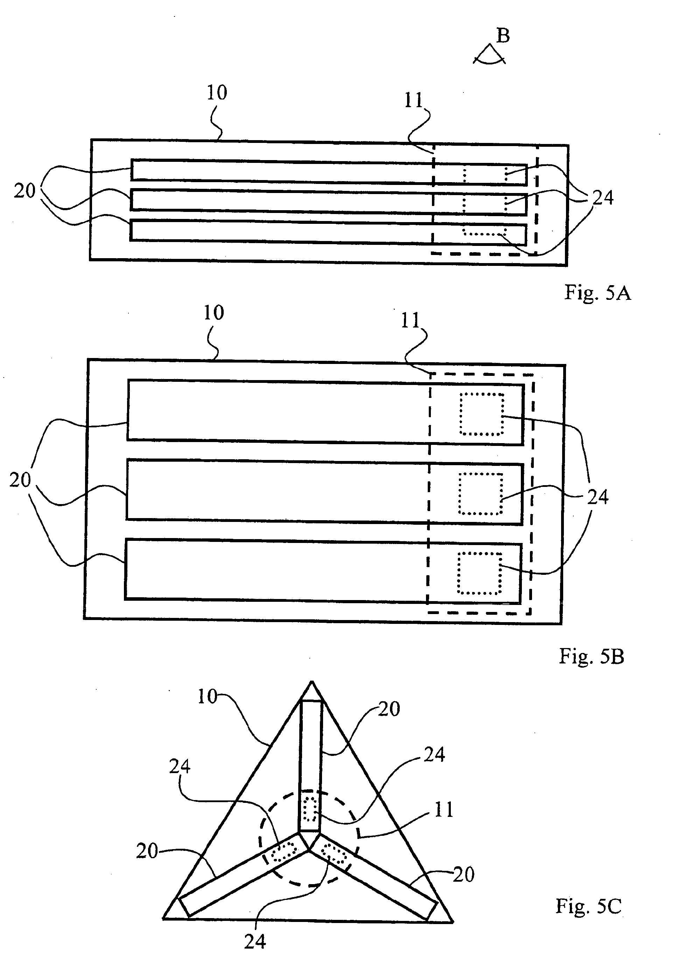

- Fig. 5A: zeigt eine Seitenansicht einer Ausführungsform der erfindungsgemäßen Vorrichtung, bei welcher die Farbmischung innerhalb eines Pixels 10 durch drei übereinander liegende Subpixel 20 hervorgerufen wird.
- Fig. 5B: zeigt eine Draufsicht einer weiteren Ausführungsform der erfindungsgemäßen Vorrichtung, bei welcher die Farbmischung innerhalb eines Pixels 10 durch drei nebeneinander liegende Subpixel 20 hervorgerufen wird.
- Fig. 5C: zeigt eine Abwandlung der in Fig. 5B gezeigten Ausführungsform, bei welcher die Subpixel 20 jeweils einen Winkel von 120 Grad zueinander aufweisen, so dass das Pixel eine dreieckige Form erhält.
- Fig. 6A: zeigt wesentliche Teile eines erfindungsgemäßen Subpixels 20, bei welchem die fluidische Kette in Form eines Doppelstrangs verläuft, mit einem bidirektional wirkenden Mittel zum Transport 12 der Farben F.
- Fig. 6B: zeigt wesentliche Teile eines erfindungsgemäßen Subpixels 20, bei welchem die fluidische Kette in Form eines Doppelstrangs verläuft, mit zwei unidirektional wirkenden Mitteln zum Transport 12 der Farben F.
- Fig. 6C: zeigt wesentliche Teile eines erfindungsgemäßen Subpixels 20, bei welchem die fluidische Kette in Form eines Doppelstrangs verläuft, der derart angeordnet ist, dass sich ein fluidischer Kreislauf ergibt.

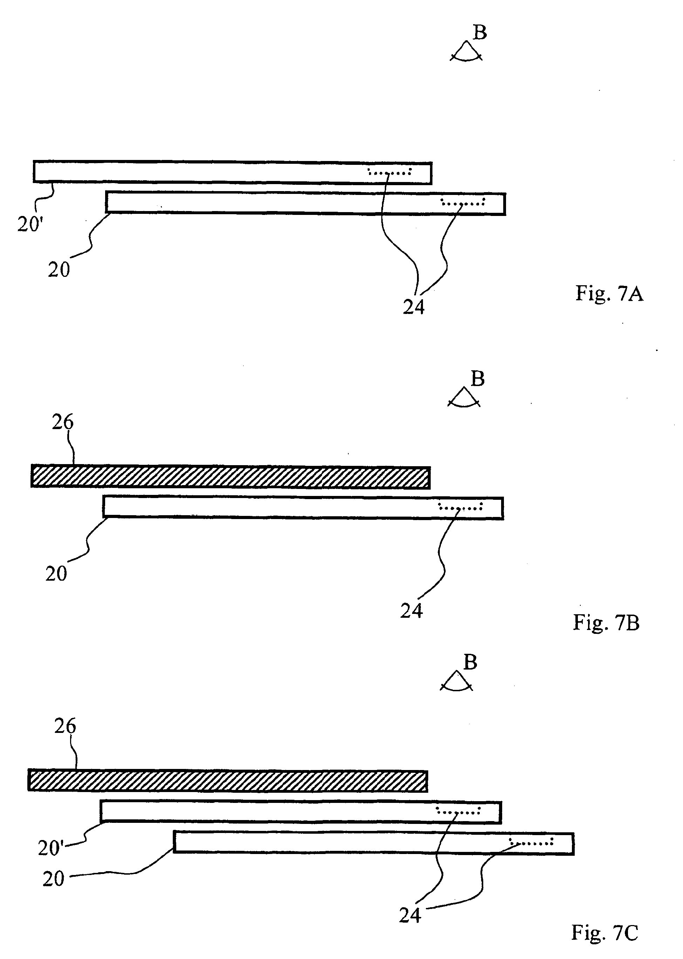

- Fig. 7A: zeigt eine Anordnung zweier erfindungsgemäßer Subpixel, so dass sich das Subpixelbildfenster 24 eines ersten Pixels 20 dadurch ergibt, dass seine restlichen Teile aus Richtung eines Betrachters B von einem weiteren Subpixel 20' verdeckt werden.
- Fig. 7B: zeigt eine Anordnung zweier erfindungsgemäßer Subpixel, so dass sich das Subpixelbildfenster 24 eines Pixels 20 dadurch ergibt, dass seine restlichen Teile aus Richtung eines Betrachters B von einer Abdeckung 26 verdeckt werden.
- Fig. 7C: zeigt eine Kombination der in Fig. 7A und Fig. 7B gezeigten Anordnungen.

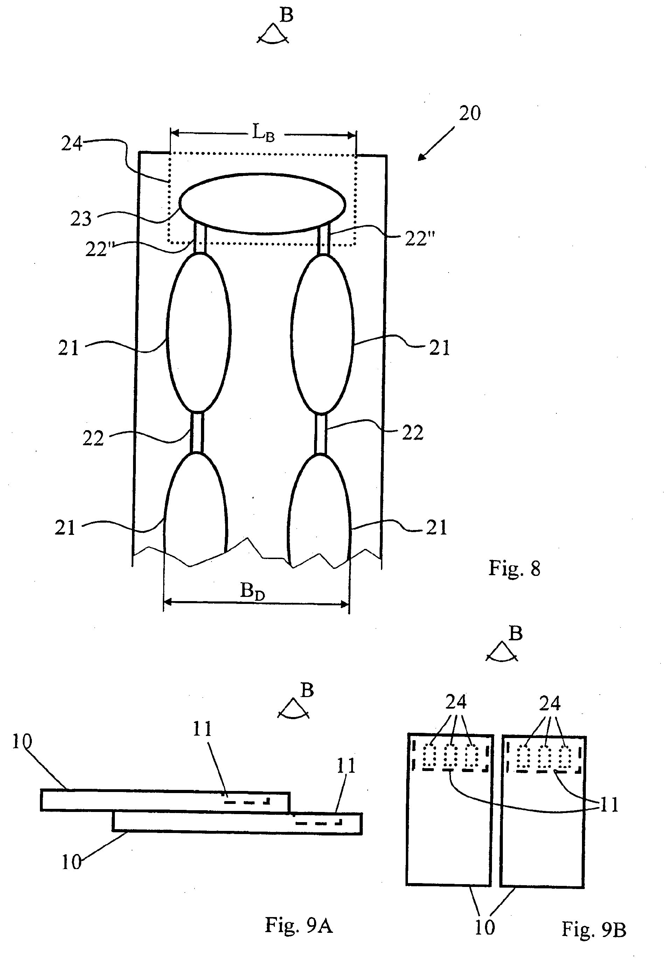

- Fig. 8: zeigt die Schnittansicht einer Anordnung der erfindungsgemäßen Vorrichtung, nach der das Subpixelbildfenster 24 derart bemessen ist, dass es im Wesentlichen die aus Richtung eines Betrachters B gesehen darunter liegenden Kompartimente 21 der fluidischen Kette verdeckt.
- Fig. 9A: zeigt eine Anordnung zweier erfindungsgemäßer Pixel 10, nach der zwei Pixel 10 derart übereinander angeordnet sind, dass nur das jeweilige Pixelbildfenster 11 von einem Betrachter B aus sichtbar ist.
- Fig. 9B: zeigt eine Anordnung zweier erfindungsgemäßer Pixel 10, nach der zwei Pixel 10 nebeneinander angeordnet sind, und bei denen die Farbmischung innerhalb eines Pixels 10 durch ebenfalls nebeneinander angeordnete Subpixelbildfenster 24 erreicht wird.

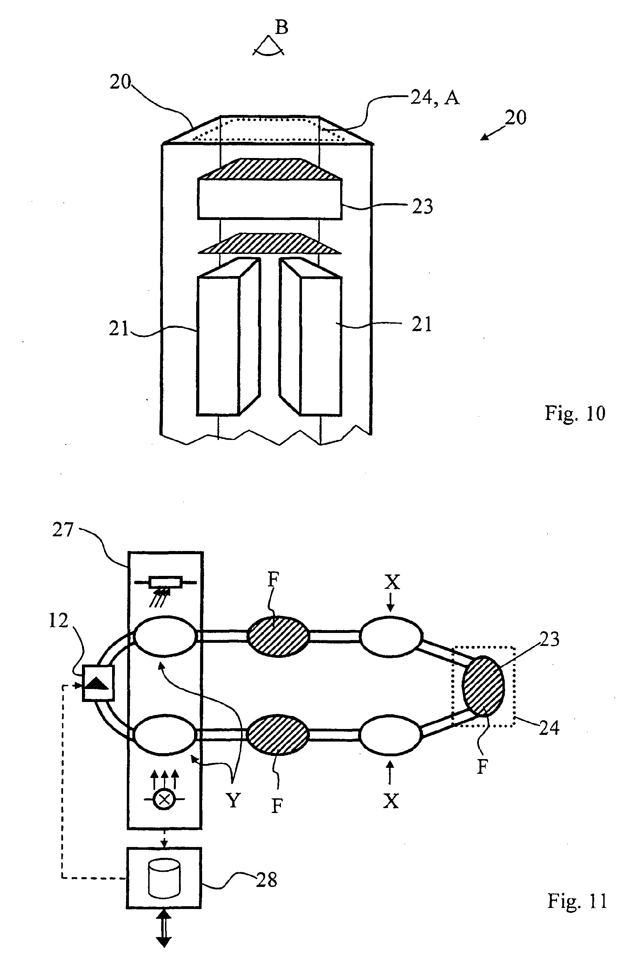

- Fig. 10: zeigt eine Darstellung zur Verdeutlichung der Querschnittsflächenverhältnisse bei einer Ausführungsform der erfindungsgemäßen Vorrichtung, bei der das Subpixelbildfenster 24 mit Bildkompartiment 23 aus Richtung eines Betrachters B gesehen die darunter liegenden Bildkompartimente 21 verdeckt.
- Fig. 11: zeigt eine Ausführungsform wesentlicher Teile eines Subpixels 20 der erfindungsgemäßen Vorrichtung, welche insbesondere Mittel zur Detektion 27 sowie Mittel zum Mittel zum Speichern und Abrufen 28 umfasst.

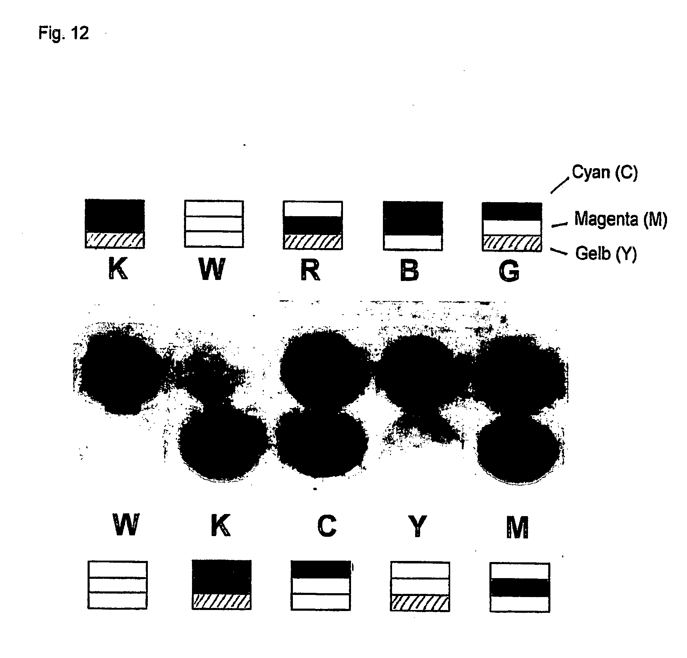

- Fig. 12: zeigt, wie die Farben Rot, Blau, Grün, Cyan, Gelb, Magenta sowie Weiß und Schwarz mit Hilfe übereinander liegender Subpixel gebildet werden können.

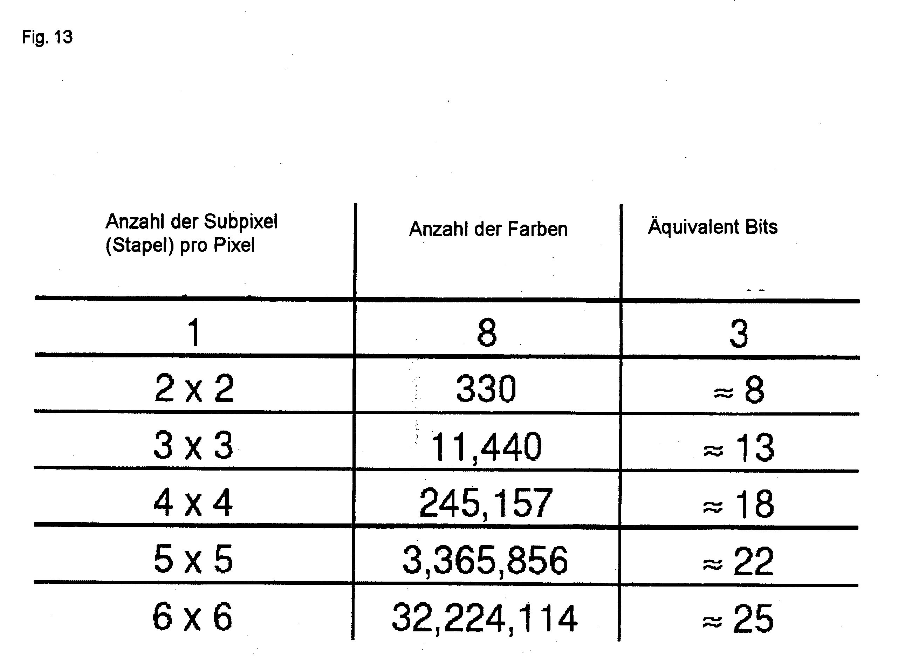

- Fig. 13: stellt tabellarisch dar die Anzahl der Farben sowie der äquivalenten Bits, die mit einer bestimmten Matrix aus Subpixeln pro Pixel dargestellt werden können.

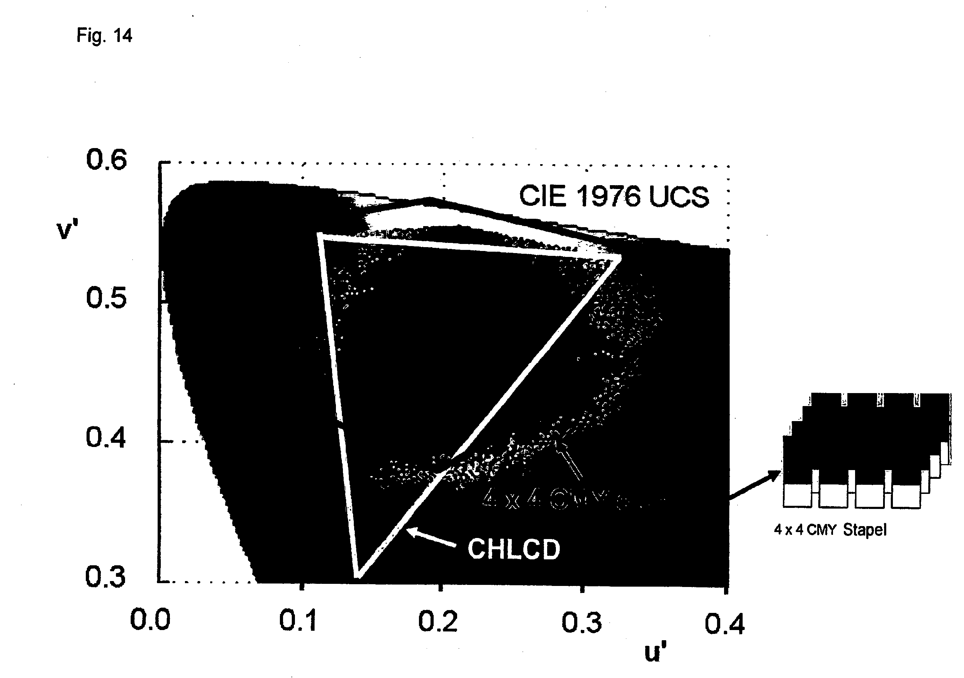

- Fig. 14: zeigt, satt Schwarz dargestellt, den Farbraum, der mit einem 4 x 4-Pixel darstellbar ist, im Vergleich mit dem Farbraum eines Druckers (graue Umrandung) und einer cholesterischen Flüssigkristallanzeige (weiße Umrandung).

### Figurenbeschreibung

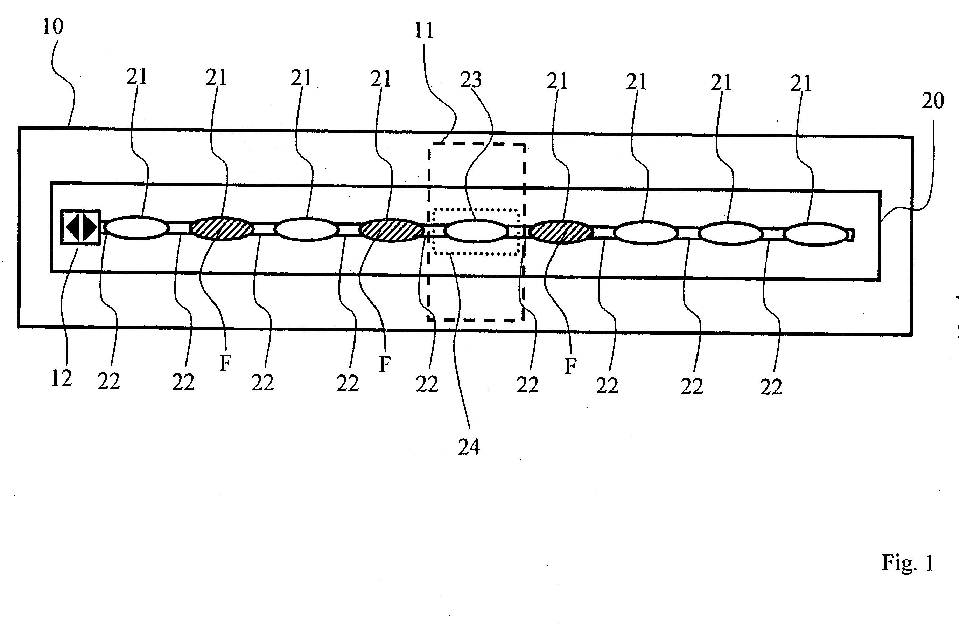

Die **Fig. 1** zeigt die erfindungsgemäße Vorrichtung in einem Grundaufbau, der alle wesentlichen Elemente derselben umfasst.

Dementsprechend besteht die erfindungsgemäße Vorrichtung aus mindestens (hier: genau) einem Pixel 10, dessen Grenzen durch die äußerste eckige Umrandung angedeutet sind. Außerdem umfasst das Pixel 10 ein Pixelbildfenster 11, dessen Grenzen in dieser und allen folgenden Figuren durch eine dicke gestrichelte Linie angezeigt werden.

Das Pixel 10 umfasst erfindungsgemäß mindestens (hier: genau) ein Subpixel 20, welches ebenfalls durch eine entsprechende durchgezogene Umrandung angedeutet wird. Das Subpixel beinhaltet eine Reihe von Kompartimenten 21, die mittels Kanälen 22 untereinander fluidisch verbunden sind und so eine fluidische Kette bilden. Einige der Kompartimente enthalten eine Farbe F (schraffiert), andere sind leer dargestellt, enthalten demnach keine Farbe, z.B. Luft oder ein farbloses Trägerfluid. Nicht dargstellt, aber dennoch bevorzugt ist das Vorhandensein nicht gleicher, sondern unterschiedlicher Farben F in den Kompartimenten einer fluidischen Kette. Eines dieser Kompartimente ist als Bildkompartiment 23 ausgebildet. In der vereinfachten Darstellung unterscheidet sich dieses äußerlich nicht von den benachbarten Kompartimenten 21, was jedoch erfindungsgemäß je nach Bedarf ohne weiteres möglich wäre. Das Bildkompartiment 24 befindet sich inner- bzw. unterhalb eines Subpixelbildfensters 24, dessen Grenzen in dieser und allen folgenden Figuren durch eine dicke gepunktete Linie angezeigt werden. Durch dieses Subpixelbildfenster 24 ist ausschließlich das Bildkompartiment 23 bzw. dessen Inhalt von außen sichtbar. Alle übrigen Bestandteile des Subpixels sollen erfindungsgemäß vor einem Betrachter verborgen bleiben. Das Subpixel 20 umfasst schließlich noch ein Mittel zum Transport 12 der Farben F, welches in der Fig. 1 am Ende der fluidischen Kette angeordnet ist. Durch Fördern von beispielsweise Luft in die fluidische Kette hinein wandern nun die Farben von einem Kompartiment 21 zum nächsten und passieren dabei auch das Bildkompartiment 23. Je nach dort aktuell vorhandener Farbe F entsteht ein durch das Subpixelbildfenster 23 und das Pixelbildfenster 11 von außen wahrnehmbarer unterschiedlicher Farbeindruck. Das Mittel zum Transport 12 der Farben F ist in der Fig. 1 als bidirektional wirkendes Mittel dargestellt. Alternativ könnten auch zwei unidirektional wirkende Mittel vorgesehen sein, die erfindungsgemäß auch an verschiedenen Stellen der fluidischen Kette angeordnet sein können.

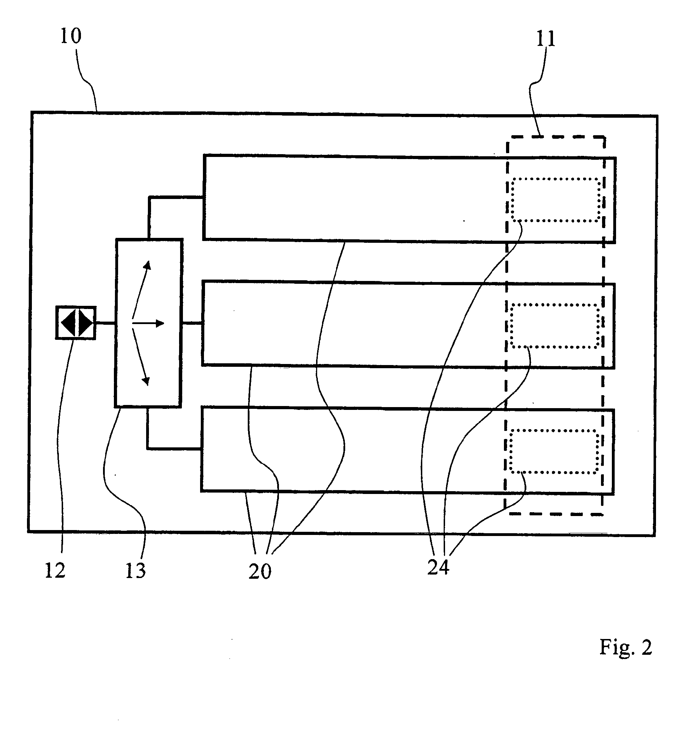

Die **Fig. 2** zeigt eine weitere Ausführungsform der erfindungsgemäßen Vorrichtung. Diese umfasst hier ein Pixel 10, drei Subpixel 20, ein Mittel zum Transport 12 der Farben F sowie ein Mittel zur Wahl 13 des Subpixels 20. Im Gegensatz zu der in der vorigen Figur dargestellten Variante besitzt also nicht jedes Subpixel 20 ein eigenes Mittel zum Transport 12, sondern drei Subpixel 20 teilen sich dieses Mittel. Um trotzdem jedes dieser Subpixel separat ansteuern zu können, ist ein Mittel zur Wahl 13 des Subpixels vorgesehen, welches in geeigneter, hier nicht näher dargestellter Form ansteuerbar sein muss, um nur in dem bzw. den gewünschten Subpixeln 20 einen Transport der jeweiligen, in der fluidischen Kette vorhandenen Farben F zu bewirken. Die entsprechend notwendigen fluidischen Kanäle sind in der Fig. 2 nur mittels durchgezogener Striche angedeutet.

Nicht dargestellt ist die Unterschiedlichkeit der Farben F der jeweiligen fluidischen Ketten. Es ist jedoch bevorzugt, dass innerhalb einer Kette jeweils unterschiedliche Farben F zum Einsatz kommen, und es ist besonders bevorzugt, dass sich die einzelnen fluidischen Ketten innerhalb eines Pixels 10 in ihren Farbinhalten ebenfalls voneinander unterscheiden und nicht ausschließlich dieselben Farben F enthalten, so dass innerhalb einen Pixels 10 mit der Mischung unterschiedlicher Farben F ein größerer Farbraum abgedeckt werden kann. Diese einzelnen Farben sind durch die jeweiligen Subpixelbildfenster 24 von außen sichtbar und werden durch ein gemeinsames Pixelbildfenster 11 zusammengefasst.

Die **Figuren 3A bis 3D** zeigen Teile einer fluidischen Kette mit unterschiedlich geformten Kompartimenten 21.

**Figur 3A** zeigt einen Teil einer fluidischen Kette mit ellipsenförmigen Kompartimenten 21 entsprechend der erfindungsgemäßen Vorrichtung in einer ersten Ansicht. Diese erste Ansicht kann eine Drauf- oder eine Seitenansicht sein. Erfindungsgemäß ist der Querschnitt Q durch das Kompartiment 21, welches auch ein Bildkompartiment 23 sein kann, in mindestens einer ersten Schnittebene ellipsenförmig. In der dargestellten Form entspricht diese Schnittebene gerade der Blattebene und verläuft im Wesentlichen durch den Volumenmittelpunkt des jeweiligen Kompartiments 21. Das Kompartiment 21 wird mittels Kanälen 22 von den benachbarten Kompartimenten 21' abgegrenzt und sein Querschnitt Q verjüngt sich dementsprechend in Richtung des jeweils benachbarten Kompartimentes 21'.

Für den Fall, dass sich der in Fig. 3A gezeigte ellipsenförmige Querschnitt des bzw. der Kompartimente 21, 21' auch in eine zweite Schnittebene hin erstreckt, welche senkrecht auf der in Fig. 3A gezeigten ersten Schnittebene steht und entlang der strichpunktierten Linie A-A verläuft, zeigt **Fig. 3B** eine Schnittansicht der Fig. 3A entlang der Schnittkante A-A. Dementsprechend zeigen die Kompartimente im Wesentlichen die gleiche ellipsenförmige Ausbildung wie in Fig. 3A. Die Fig. 3B zeigt also entweder eine Schnittansicht der Draufsicht aus Fig. 3A oder eine Draufsicht der Schnittansicht aus Fig. 3A.

Für den Fall, dass sich der in Fig. 3A gezeigte ellipsenförmige Querschnitt des bzw. der Kompartimente 21, 21' nur in der dort gezeigten erste Schnittebene existiert, zeigt **Fig. 3C** eine Schnittansicht der Fig. 3A entlang der Schnittkante A-A. Dementsprechend zeigen die Kompartimente eine Form, die im Wesentlichen jeweils rechteckig ist.

Die **Fig. 3D** zeigt eine weitere erfindungsgemäße Querschnittsform der Kompartimente 21, 21', nach der die Kompartimente in Richtung der sie jeweils begrenzenden Kanäle 22 hin abgerundet sind. Auch hier verjüngt sich der Querschnitt Q eines Kompartimentes 21 in Richtung der jeweils benachbarten Kompartimente 21'. Analog zu dem zuvor in Fig. 3B besprochenen Fall kann sich diese Querschnittsform auch in einer zweiten Schnittebene zeigen, oder das Kompartiment kann alternativ ähnlich dem in der Fig. 3C besprochenen Fall eine im Wesentlichen rechteckige Form aufweisen.

Die **Figuren 4A bis 4E** zeigen Seiten- bzw. Querschnittsansichten verschiedener Arten der Seitenwandstrukturierung eines Kanals 22, welche zur Ausbildung erfindungsgemäßer Kompartimente 21, 21' führen.

Dementsprechend zeigt die **Fig. 4A** einen Kanal 22, welcher im Wesentlichen ebene Seitenwände 22' umfasst. Diese Ebenheit muss sich jedoch lediglich in die Längsrichtung des Kanals 22 erstrecken, es sind demnach auch runde Kanalquerschnitte umfasst (vgl. Fig. 4E). Die Seitenwände tragen periodische Verjüngungen 25. Diese Verjüngungen weisen eine Länge L auf. Durch die erfindungsgemäßen Verjüngungen wird der Kanal 22 in ein Kompartiment 21 mit benachbarten Kompartimenten 21' unterteilt.

Die **Fig. 4B** zeigt eine ähnliche Ausführungsform wie die Fig. 4A, jedoch befinden sich die periodischen Verjüngungen 25 mit der Länge L jeweils an allen Seitenwänden 22', also am gesamten Umfang des Kanals 22, und nicht nur an zwei gegenüberliegenden Seitenwänden 22', wie in der Fig. 4A dargestellt.

Die **Fig. 4C** zeigt einen Kanalquerschnitt entsprechend der in Fig. 4A gezeigten Schnittlinie B-B. Erkennbar sind die vier den Kanal 22 begrenzenden Seitenwände 22' und an zwei gegenüber liegenden Seitenwänden 22' befindliche periodische Verjüngungen 25.

Analog hierzu zeigt die **Fig. 4D** einen Kanalquerschnitt entsprechend der in Fig. 4B gezeigten Schnittlinie C-C. Erkennbar sind die vier den Kanal 22 begrenzenden Seitenwände 22' und eine an allen Seitenwänden 22' befindliche periodische Verjüngung 25, die den Querschnitt des Kanals 22 am gesamten Umfang verkleinert.

In der **Fig. 4E** ist ein Querschnitt durch einen erfindungsgemäßen Kanal 22 dargestellt, welcher im Wesentlichen rund ist. Die Ebenheit der Seitenwand bezieht sich demnach lediglich auf die Erstreckungsrichtung des Kanals, die in der Fig. 4E senkrecht zur Blattebene verläuft. Die periodische Verjüngung 25 verläuft daher ringförmig entlang des gesamten Kanalumfangs.

Die **Fig. 4F** zeigt eine weitere erfindungsgemäße Form eines Kanals 22, bei welcher das Kompartiment 21 von den benachbarten Kompartimenten 21' dadurch gebildet wird, dass die periodischen Verjüngungen 25 eine sehr kleine Länge L besitzen.

Die Figuren **5A bis 5C** zeigen verschiedene Ausführungsformen der erfindungsgemäßen Vorrichtung, die sich insbesondere durch die Anordnung der Subpixel 20 innerhalb eines Pixels 10 unterscheiden.

In der **Fig. 5A** sind die drei Subpixel 20 aus Richtung eines Betrachters B gesehen übereinander angeordnet. Jedes dieser Subpixel 20 weist ein eigenes Subpixelbildfenster 24 auf. Um den Inhalt des untersten Subpixels 20 erkennen zu können, müssen die Subpixelbildfenster 24 der darüber liegenden Subpixel 20 entsprechend transparent sein. Dies ist durch die gepunkteten Linien angedeutet, welche sich jeweils über die gesamte Dicke des entsprechenden Subpixels 20 erstrecken. Die Subpixelbildfenster 24 werden durch das Pixelbildfenster 11 zu einer optischen Einheit zusammengefasst.

Der erfindungsgemäße Farbmischeffekt wird hierbei dadurch erzielt, dass von einem Betrachter B aus gesehen alle drei Farben F der einzelnen Subpixel 20 gleichzeitig sichtbar sind.

Die **Fig. 5B** zeigt drei Subpixel 20 mit Subpixelbildfenstern 24, die innerhalb des Pixelbildfensters 11 eines Pixels 10 nebeneinander liegend angeordnet sind.

Der erfindungsgemäße Farbmischeffekt wird hierbei dadurch erzielt, dass von einem Betrachter B aus gesehen alle drei Farben F der einzelnen Subpixelfenster 24 so nah beieinander angeordnet sind, dass sie aus entsprechendem Abstand betrachtet zu einem gemeinsamen Farbeindruck verschmelzen.

Analog zu Fig. 5B zeigt **Fig. 5C** eine alternative Anordnung nebeneinander liegender Subpixel 20 mit Subpixelbildfenstern 24, welche in einem Pixelbildfenster 11 eines Pixels 10 zusammenfassbar sind. Die Subpixel sind dabei in einem Winkel von 120 Grad zueinander angeordnet, so dass die Form des Pixels 10 im Wesentlichen dreieckig ist. Nicht dargestellt ist eine Variante der dargestellten Ausführungsform, nach der auch die Bildkompartimente der Subpixel aus Betrachterrichtung gesehen eine Form aufweisen, die eine optimierte Ausnutzung der sichtbaren Fläche des Pixelbildfensters erlaubt (z.B. kreissegmentartige Bildkompartimente).

Die **Figuren 6A bis 6C** zeigen unterschiedliche Ausführungsformen eines Subpixels 20 der erfindungsgemäßen Vorrichtung, welche sich insbesondere durch die Anordnung des Mittels zum Transport 12 der (nicht dargestellten) Farben F und die fluidische Konnektierung der Kompartimente 21 zeigt. In allen Darstellungen liegt die fluidische Kette in Form eines Doppelstrangs vor.

In der **Fig. 6A** befindet sich ein einzelnes, bidirektional wirkendes Mittel zum Transport 12 im Verlauf eines der Kanäle 22, welche die Kompartimente 21 und das Bildkompartiment 23 miteinander verbinden. Der erfindungsgemäße Doppelstrang besteht aus zwei parallel verlaufenden Segmenten der fluidischen Kette, von denen jedes mehrere Kompartimente 21 sowie entsprechende Kanäle 22 umfasst. Die beiden Segmente sind mittels des Bildkompartiments 23 fluidisch miteinander verbunden, welches gleichzeitig das die beiden Segmente verbindende Verbindungskanalstück 22'' ist. Das andere Ende des Doppelstrangs ist offen, da die Segmente am entsprechenden Ende (jeweils links im Bild) nicht miteinander verbunden sind.

Die **Fig. 6B** zeigt einen der Fig. 6A ähnlichen Aufbau eines Subpixels 20 der erfindungsgemäßen Vorrichtung, bei welcher anstelle eines einzelnen, bidirektional wirkenden Mittels zum Transport 12 der Farben F zwei separate, unidirektional wirkende Mittel zum Transport 12 vorhanden sind.

Die **Fig. 6C** zeigt eine weitere Ausführungsform der Vorrichtung ähnlich Fig. 6A und 6B, bei welcher lediglich ein einziges, unidirektional wirkendes Mittel zum Transport 12 vorhanden ist. Außerdem ist die fluidische Kette mittels eines Verbindungskanalstücks 22'', welches am dem Bildkompartiment 23 gegenüberliegenden Ende angeordnet ist, vollständig geschlossen. Daher kann das Mittel zum Transport 12 den Inhalt der fluidischen Kette in einem Kreislauf fördern. Die hier dargestellte Ausführungsform ist erfindungsgemäß besonders bevorzugt.

Die **Figuren 7A bis 7C** zeigen Anordnungen von Subpixeln 20, durch welche Subpixelbildfenster 24 gebildet werden. Das Subpixelbildfenster 24 des jeweiligen Subpixels muss dabei an einem Ende des Subpixels angeordnet sein.

Die **Fig. 7A** zeigt zwei Subpixel 20, welche aus Richtung eines Betrachters B gesehen versetzt übereinander liegen. Das obere Subpixel 20' verdeckt dabei einen wesentlichen Teil des unteren Subpixels 20, so dass lediglich das Subpixelbildfenster 24 des unteren Subpixels 20 von einem Betrachter B aus sichtbar ist. In dem dargestellten Fall kann also der restliche Bereich des unteren Subpixels 20 transparent sein, ohne dass der transparente Bereich von einem Betrachter B aus sichtbar wäre.

Die **Fig. 7B** zeigt eine Ausführungsform, nach der das Subpixelbildfenster 24 eines Subpixels 20 dadurch gebildet wird, dass der restliche Bereich des Subpixels 20 aus Richtung eines Betrachters B gesehen durch eine Abdeckung 26 verdeckt wird.

Die **Fig. 7C** zeigt eine Kombination der in Fig. 7A und Fig. 7B gezeigten Ausführungsformen. Das Subpixelbildfenster 24 des unteren Subpixels 20 wird durch den versetzt darüber liegenden Subpixel 20' gebildet. Das Subpixelbildfenster 24 des oberen Subpixels 20' wird durch die versetzt darüber liegende Abdeckung 26 gebildet. Erfindungsgemäß können auch noch weitere, nicht dargestellte Subpixel 20 dergestalt versetzt unterhalb des gezeigten Subpixels 20 angeordnet sein, dass ausschließlich deren Subpixelbildfenster aus Richtung eines Betrachters B sichtbar sind.

Die **Fig. 8** zeigt die Schnittansicht einen Teil einer Anordnung der erfindungsgemäßen Vorrichtung, nach der das Subpixelbildfenster 24 eines Subpixels 20 derart bemessen ist, dass es im Wesentlichen die aus Richtung eines Betrachters B gesehen darunter liegenden Kompartimente 21 der fluidischen Kette verdeckt. Die Breite B_{D} des hier dargestellten Doppelstranges entspricht dabei im Wesentlichen der Breite L_{B} des Subpixelbildfensters 24 bzw. des Bildkompartiments 23. Das Bildkompartiment 23 besitzt die erfindungsgemäß bevorzugte ellipsenähnliche Querschnittsform. Durch die Anordnung der restlichen Kompartimente 21 sowie der Kanäle 22 und 22'' unterhalb des Subpixelbildfensters 24 werden diese aus Sicht eines Betrachters B verdeckt. Gleichzeitig benötigt die hier dargestellte Ausführungsform besonders wenig Platz zu den Seiten hin, so dass eine hohe Subpixeldichte innerhalb eines Pixels 10 und somit eine hohe Pixeldichte in einem erfindungsgemäßen Display erreicht werden kann.

Die **Figuren 9A und 9B** zeigen zwei Ausführungsformen der erfindungsgemäßen Vorrichtung, welche jeweils zwei Pixel 10 zeigen, die entweder über- oder nebeneinander angeordnet sind.

Die **Fig. 9A** entspricht im Wesentlichen der Fig. 5A, mit dem Unterscheid, dass nicht Subpixel 20, sondern Pixel 10 derart übereinander angeordnet sind, dass lediglich das aus Richtung eines Betrachters B sichtbare Fenster (Pixelbildfenster 11) des unteren Pixels 10 sichtbar ist.

Die **Fig. 9B** zeigt eine Anordnung zweier erfindungsgemäßer Pixel 10, nach der zwei Pixel 10 nebeneinander angeordnet sind, und bei denen die Farbmischung innerhalb eines Pixels 10 durch ebenfalls nebeneinander angeordnete Subpixelbildfenster 24 erreicht wird, die jeweils in einem Pixelbildfenster 11 zusammengefasst sind. Die Subpixel, von denen in der Fig. 9B nur die jeweiligen Subpixelbildfenster 24 dargestellt sind, sind dabei besonders bevorzugt wie in Fig. 8 dargestellt ausgeführt.

Die **Fig. 10** zeigt eine Darstellung zur Verdeutlichung der Querschnittsflächenverhältnisse bei einer Ausführungsform der erfindungsgemäßen Vorrichtung gemäß Anspruch 19. Zur besseren Übersicht ist diese Darstellung perspektivisch ausgeführt und entspricht im Wesentlichen der in Fig. 8 dargestellten Ausführungsform. Dementsprechend ist das Subpixelbildfenster 24 mit Bildkompartiment 23 aus Richtung eines Betrachters B gesehen so angeordnet, dass die darunter liegenden Bildkompartimente 21 verdeckt werden, von denen lediglich zwei dargestellt sind. Erfindungsgemäß entspricht die aus Richtung eines Betrachters B sichtbare Subpixelbildfläche A im Wesentlichen der aus der gleichen Richtung gesehenen gesamten Querschnittsfläche des Bildkompartiments 23 und/oder des Doppelstranges. Die im Wesentlichen äquivalenten Flächen sind in der Fig. 10 durch eine Schraffur bzw. die gepunktete Linie des Subpixelbildfensters 24 hervorgehoben. Durch die in der Fig. 10 dargestellte Größe und Positionierung des Bildkompartiments 23 und der übrigen Kompartimente 21 kann die von einem Betrachter B aus wahrgenommene Pixelbildfläche A im Verhältnis zu den Außenabmessungen des Subpixels 20 möglichst groß ausfallen. Außerdem können weitere Subpixel sehr dicht an dem gezeigten Subpixel 20 angeordnet werden, woraus sich Pixel mit entsprechend hoher Subpixelbilddichte ergeben. Aus derartigen Pixeln kann dann ebenfalls ein Display mit optimierter Pixelbilddichte hergestellt werden, welches ein möglichst hohes Verhältnis von Pixelbildfläche zu Restfläche aufweist.

Die **Fig. 11** zeigt eine Ausführungsform wesentlicher Teile eines Subpixels 20 der erfindungsgemäßen Vorrichtung, welche insbesondere Mittel zur Detektion 27 sowie Mittel zum Mittel zum Speichern und Abrufen 28 umfasst. Die Kompartimente des Subpixels sind teilweise mit Farbe F gefüllt, teilweise leer dargestellt, wodurch sich eine entsprechende Lücke ersten Umfangs X ergibt. In der hier dargestellten Form ist diese Lücke gerade ein Kompartiment breit. Lediglich an einer Stelle sind zwei leere Kompartimente hintereinander dargestellt; hierdurch ergibt sich eine Lücke zweiten Umfangs Y, die gerade zwei Kompartimente breit ist. Diese Lücke zweiten Umfangs Y darf erfindungsgemäß nur ein einziges Mal in der fluidischen Kette vorkommen, da ihre besondere Breite von einem Mittel zur Detektion 27 detektiert werden kann. In der dargestellten Ausführungsform umfasst dieses Mittel zur Detektion 27 eine Lichtquelle (Glühlampensymbol) und einen lichtempfindlichen Widerstand (LDR-Schaltzeichen). Nur bei Vorliegen einer Lücke zweiten Umfangs Y kann das Licht von der Lichtquelle zum lichtempfindlichen Widerstand gelangen und so das Vorliegen der Lücke zweiten Umfangs Y anzeigen. Durch die Detektion der Lücke zweiten Umfangs Y ist nun die Lage der einzelnen Farben F in den Kompartimenten der fluidischen Kette bekannt. Dementsprechend kann mittels der Detektion der Lücke zweiten Umfangs Y eine Initialisierung der erfindungsgemäßen Vorrichtung erfolgen. Eine solche Initialisierung kann beispielsweise vor einer Erstinbetriebnahme oder bei Verlust der Information über die aktuelle Lage der einzelnen Farben F innerhalb der fluidischen Kette nötig sein.

Die Fig. 11 zeigt außerdem noch Mittel zum Speichern und Abrufen 28 der Lage der Lücke zweiten Umfangs Y. Für den nicht dargestellten Fall, dass die Vorrichtung alternativ oder zusätzlich ein Mittel zur Detektion der Lage mindestens einer der Farben F umfasst, kann das Mittel zum Speichern und Abrufen 28 analog eingesetzt werden. Eingezeichnet sind außerdem noch entsprechende Datenleitungen, welche durch die dünnen gestrichelten Linien mit Pfeil symbolisiert werden. Dementsprechend kann das Mittel zum Speichern und Abrufen 28 das Mittel zum Transport 12 der Farben F solange ansteuern und somit einen Weitertransport der Farben F in der fluidischen Kette verursachen, bis es vom Mittel zur Detektion 27 ein Signal erhält, welches ihm die Detektion der Lücke zweiten Umfangs Y anzeigt. Außerdem kann das Mittel zum Speichern und Abrufen 28 auch dazu dienen, die Lage der Lücke zweiten Umfangs Y und/oder die Lage mindestens einer der Farben F abzuspeichern und ggf. an eine nicht dargestellte Kommunikationseinheit weiterzuleiten. Ebenso kann das Mittel zum Speichern und Abrufen 28 Signale einer nicht dargestellten Kommunikationseinheit empfangen und in Ansteuerimpulse für das Mittel zum Transport 12 der Farben F umsetzen. Den bidirektionalen Informationsaustausch symbolisiert der an das Mittel zum Speichern und Abrufen 28 angrenzende Doppelpfeil.

**Fig. 12** zeigt, wie die Farben Rot, Blau, Grün, Cyan, Gelb, Magenta, Weiß und Schwarz mit Hilfe eines Stapels aus drei übereinander liegenden Subpixeln gebildet werden kann, bei denen jeweils eine der Farben Cyan, Magenta oder Gelb ins Pixelbildfenster geholt wird. Dabei ist in jedem Stapel das in der Darstellung vorgesehene oberste Subpixel für Cyan vorgesehen, das mittlere für Magenta, das untere für Gelb. Aus Gründen der Deutlichkeit der Darstellung ist, wenn "Gelb" ins Pixelfenster geholt wird, das schraffiert dargestellt. Damit wird Weiß (W) darstellbar, indem keine der Farben Cyan, Magenta oder Gelb ins Pixelbildfenster geholt wird, Schwarz (K), indem alle Farben ins Pixelbildfenster geholt werden, Cyan (C), Gelb (Y), Magenta (M), indem die entsprechende der Farben ins Bildfenster geholt wird, Rot (R), indem Magenta und Gelb ins Pixelbildfenster geholt werden, Blau (B), indem Cyan und Magenta ins Pixelbildfenster geholt werden, und Grün (G), indem Cyan und Gelb ins Pixelbildfenster geholt werden.

**Fig. 13** stellt tabellarisch die Anzahl der Farben sowie die äquivalenten Bits dar, die mit den gemäß Fig. 12 erzeugten Farben dargestellt werden können. Man sieht, dass je nach Anzahl der Subpixel bzw. Stapel pro Pixel Farbanzahlen möglich sind, die eine große Farbtreue bei der Darstellung des Farbraumes ermöglichen.

Das Ergebnis ist in **Fig. 14** gezeigt. Satt dargestellt ist der Farbraum, der mit einem Pixel aus 4 x 4 Subpixeln bzw. Stapeln erreichbar ist, wie im Zusammenhang mit Fig. 12 beschrieben worden ist. Man sieht, dass der Farbraum sehr gut dem entspricht, der mit einem Drucker (graue Umrandung) erzielbar ist. Zum Vergleich ist mit weißer Umrandung eingezeichnet, wie der Farbraum einer cholesterischen Flüssigkristallanzeige im Vergleich liegt.

Mit der Erfindung ist daher auf einfachem Wege eine sehr farbgenaue Darstellung von Bildern auf einem Display möglich.

### Bezugszeichenliste und Abkürzungen

- A: Subpixelbildfläche
- B: Betrachter
- B_{D}: Breite des Doppelstrangs
- F: Farbe
- L: Länge
- L_{B}: Länge des Bildkompartiments / Subpixelbildfensters
- Q: Querschnitt
- X: Lücke ersten Umfangs
- Y: Lücke zweiten Umfangs
- 10: Pixel
- 11: Pixelbildfenster
- 12: Mittel zum Transport
- 13: Mittel zur Wahl
- 20: Subpixel
- 20': weiteres Subpixel
- 21: Kompartiment
- 21': benachbartes Kompartiment
- 22: Kanal
- 22': Seite, Seitenwand
- 22'': Verbindungskanalstück
- 23: Bildkompartiment
- 24: Subpixelbildfenster
- 25: Verjüngung, periodische Verjüngung
- 26: Abdeckung
- 27: Mittel zur Detektion
- 28: Mittel zum Speichern und Abrufen

## Patentansprüche

1. Vorrichtung zur Anzeige von farbiger Information (Farbdisplay) unter Verwendung mindestens eines einzelnen, in seiner Farbe variierbaren Bildpunktes (Pixels) (10), bei der
(a)das mindestens eine Pixel (10) aus mindestens einem Subpixel (20) besteht, wobei das Subpixel (20) eine fluidische Kette umfasst, die ein Bildkompartiment (23) mit Fenster (Subpixelbildfenster) (24) aufweist, durch das ausschließlich der jeweilige Inhalt des Bildkompartiments (23) von einem Betrachter (B) aus erkennbar ist,
(b) das mindestens eine Pixel (10) ein Pixelbildfenster (11) umfasst, durch welches im Wesentlichen nur das bzw. die jeweiligen Subpixelbildfenster (24) sichtbar sind, und
wobei die Vorrichtung außerdem Mittel zum Transport (12) von Farben (F) umfasst;
**dadurch gekennzeichnet, dass** die fluidische Kette in Form (i) einer Mehrzahl von Kompartimenten (21) zur diskreten Aufbewahrung bestimmter, festgelegter und in flüssiger Form vorliegender Farben (F) ausgebildet ist, zwischen welchen (ii) diese Farben (F) in Kanälen (22) transportierbar sind, und in den Kompartimenten (21) des mindestens einen subpixels (20) jeweils eine der Farben (F) Rot, Grün, Blau oder Cyan, Magenta, Gelb, Weiß und Schwarz enthalten ist.

2. Vorrichtung nach Anspruch 1, bei welcher die Mittel zum Transport (12) der Farben (F) aus der Gruppe umfassend Flüssigkeitspumpen und Elektrobenetzung strammen.

3. Vorrichtung nach Anspruch 1, bei welcher mindestens einer der Subpixel (20) ein eigenes Mittel zum Transport (12) der Farben (F) umfasst; oder mindestens einer der Pixel (10) mindestens ein Mittel zum Transport (12) der Farben (F) sowie ein Mittel zur Wahl (13) des Subpixels (20) umfasst; oder mindestens ein Mittel zum Transport (12) der Farben sowie ein Mittel zur Wahl (13) des jeweiligen Pixels (10) und/oder Subpixels (20) vorgegehen ist.

4. Vorrichtung nach Anspruch 1, **dadurch gekennzeichnet, dass** der Querschnitt (Q) durch jeweils ein Kompartiment (21) und/oder Bildkompartiment (23) mindestens in einer Schnittebene ellipsenförmig, ellipsenähnlich oder abgerundet ist, und sich der Querschnitt (Q) in Richtung des jeweils benachbarten Kompartimentes (21') verjüngt.

5. Vorrichtung nach Anspruch 1, **dadurch gekennzeichnet, dass** die einzelnen Kompartimente (21) bzw. das Bildkompartiment (23) dadurch gebildet werden, dass ein Kanal (22) mit im Wesentlichen ebenen Seitenwänden (22') an mindestens zwei gegenüberliegenden Seiten (22') periodische Verjüngungen (25) aufweist, die den Kanal (22) um mindestens 5% und höchstens 30% verjüngen, und deren Länge (L) entweder nicht mehr als 100 µm oder mindestens 20% der Länge des Kompartimentes beträgt.

6. Vorrichtung nach Anspruch 1, bei welcher die Subpixelbildfenster (24) jeweils eines Pixels (10) derart bemessen und angeordnet sind, dass sie übereinander und innerhalb des Pixelbildfensters (11) liegen.

7. Vorrichtung nach Anspruch 1, bei welcher die Subpixelbildfenster (21) jeweils eines Pixels (10) derart bemessen und angeordnet sind, dass sie direkt nebeneinander und innerhalb des Pixelbildfensters (11) liegen.

8. Vorrichtung nach Anspruch 1, **dadurch gekennzeichnet, dass** wesentliche Teile der fluidischen Kette in einem Doppelstrang oder in Form eines geschlossenen fluidischen Kreislaufes angeordnet sind.

9. Vorrichtung nach Anspruch 6 bis 8, bei welcher das Subpixelbildfenster (24) dadurch gebildet wird, dass auf der einem Betrachter (B) zugewandten Seite mindestens ein weiteres Subpixel (20') oder eine Abdeckung (26) alle außerhalb des Subpixelbildfensters (24) liegenden Bereiche verdeckt.

10. Vorrichtung nach Anspruch 8, bei welcher das Subpixelbildfenster (24) bzw. das Bildkompartiment (23) derart angeordnet ist, dass die übrigen Kompartimente (21) des Subpixels (20) aus Richtung eines Betrachters (B) gesehen unterhalb des am einen Ende des Doppelstranges befindlichen Subpixelbildfensters (24) angeordnet sind, so dass sie von diesem verdeckt werden.

11. Vorrichtung nach Anspruch 9, bei welcher mindestens zwei Pixel (10) derart nebeneinander angeordnet sind, dass nur das jeweilige Pixelbildfenster (11) von einem Betrachter (B) aus sichtbar ist.

12. Vorrichtung nach Anspruch 1, **dadurch gekennzeichnet, dass** die einzelnen Farben (F) in den Kompartimenten (21) und dem Bildkompartiment (23) derart angeordnet sind, dass sich zwischen den Kompartimenten (22), (23) mit Farben (F) mindestens eine Lücke ersten Umfangs (X) mit einer bestimmten Anzahl von Kompartimenten (21), (23) ohne Farbe (F) befindet, und dass außerdem genau eine Lücke zweiten Umfangs (Y) besteht, die eine von der Lücke ersten Umfangs (X) verschiedene Anzahl von Kompartimenten (21),(23) ohne Farbe (F) umfasst, und dass außerdem Mittel zur Detektion (27) dieser Lücke zweiten Umfangs (Y) vorgesehen sind.

13. Vorrichtung nach Anspruch 12, **dadurch gekennzeichnet, dass** das Mittel zur Detektion (27) der Lücke zweiten Umfangs (Y) Effekte aus der Gruppe umfassend kapazitive, induktive, optische und/oder resistive Effekte umfasst.

14. Vorrichtung nach Anspruch 12 oder 13, bei welcher die Anzahl der Kompartimente (21) inklusive dem Bildkompartiment (23) gerade der doppelten Anzahl der Farben (F) plus 1 entspricht.

15. Vorrichtung nach Anspruch 1, **dadurch gekennzeichnet, dass** jedes Pixel und/oder jedes Subpixel mindestens einen Identifizieren zur eindeutigen Unterscheidbarkeit sowie eine Kommunikationseinheit zur uni- oder bilateralen Kommunikation mit einer Ansteuereinheit zur Aufbereitung des darzustellenden Bildes und zur Weiterleitung an die Pixel (10) und/oder Subpixel (20) umfasst.

16. Vorrichtung nach Anspruch 1, **dadurch gekennzeichnet, dass** die fluidischen und/oder die elektronischen Komponenten der Pixel im Wesentlichen aus Kunststoffen bestehen und mittels Massenfertigungsverfahren herdestelle werden können.

17. Vorrichtung nach Anspruch 1, **dadurch gekennzeichnet, dass** die Subpixel (20) und die Pixel (10) aus einem flexiblen Material bestehen.

18. Verfahren zur Anzeige von farbiger Information (Farbdisplay) unter Verwendung
- mindestens eines einzelnen, in seiner Farbe variierbaren Bildpunktes (Pixels) (10), wobei das Pixel (10) aus mindestens einem Subpixel (20) besteht, und wobei das Subpixel (20) eine fluidische Kette in Form einer Mehrzahl von Kompartimenten (21) zur diskreten Aufbewahrung bestimmter, festgelegter und in flüssiger Form vorliegender Farben (F) umfasst, zwischen welchen diese Farben (F) in Kanälen (22), (22'') transportierbar sind, und wobei die fluidische Kette des jeweiligen Subpixels (20) weiter ein Bildkompartiment (23) mit Fenster (Subpixelbildfenster) (24) umfasst, durch das ausschließlich der jeweilige Inhalt des Bildkompartiments (23) von einem Betrachter (B) aus erkennbar ist;
- mindestens eines Pixelbildfensters (11), durch welches im Wesentlichen nur das bzw. die jeweiligen Subpixelbildfenster (24) sichtbar sind;
- mindestens eines Mittels zum Transport (12) der Färben (F) ;
umfassend die folgenden Schritte:
- Feststellen der Lage mindestens einer der Farben (F) in jedem Subpixel (20);
- Fördern der gewünschten Farbe (F) in das Subpixelbildfenster (24) durch Mittel zum Transport (12) der Farben (F) ;

19. verfahren nach Anspruch 18 unter Verwendung von mindestens zwei Subpixeln (20), außerdem umfassend die Schritte
- Feststellen derjenigen Farbkombination der Farben (F) aller Subpixel (20), die einem gewünschten Farbeindruck am nächsten kommt;
- Fördern der gewünschten Farben (F) in die jeweiligen Subpixelbildfenster (24).

20. Verfahren nach Anspruch 18, wobei die Vorrichtung zwecks Feststellen der Lage mindestens einer der Farben (F) außerdem ein Mittel zur Detektion (27) einer Lücke zweiten Umfangs (Y) umfasst, und wobei zum Festellen der Lage mindestens einer der Farben (F) folgende Prozesse gleichzeitig durchgeführt werden:
- Fördern der Farben (F);
- Betreiben des Mittels zur Detektion (27) einer Lücke zweiten Umfangs (Y);
solange, bis das Mittel zur Detektion (27) eine Lücke zweiten Umfangs (Y) detektiert hat.

21. Verfahren nach Anspruch 18, wobei die Vorrichtung zwecks Feststellen der Lage mindestens einer der Farben (F) alternativ oder zusätzlich zum Mittel zur Detektion (27) einer Lücke zweiten Umfangs (Y) ein Mittel zur Detektion (27) mindestens einer der Farben (F) umfasst, und wobei zum Festellen der Lage mindestens einer der Farben (F) folgende Prozesse gleichzeitig durchgeführt werden:
- Fördern der Farben (F);
- Betreiben des Mittels zur Detektion (25) mindestens einer der Farben (F);
solange, bis das Mittel zur Detektion (27) mindestens einer der Farben (F) eine bestimmte Farbe (F) detektiert hat.

22. Verfahren nach Anspruch 18, wobei
- das Feststellen der Lücke zweiten Umfangs (Y) und/oder der Lage mindestens einer der Farben (F) dadurch geschieht, dass vor dem ersten Betrieb eines jeden Subpixels (20) eine einmalige Initialisierung derselben stattfindet, und dass
- während des Betriebes, bei dem eine Positionsänderung der Lücke zweiten Umfangs (Y) und/oder der Lage mindestens einer der Farben (F) notwendig ist, die sich daraus ergebende jeweilige neue Lage abgespeichert wird, so dass
- die jeweilige Lage vor einem erneuten Betrieb abgerufen werden kann.

## Claims

1. Apparatus for the display of color information (color display) using at least one individual pixel (10), the color of which is variable, in which
(a) the at least one pixel (10) consists of at least one subpixel (20), whereby the subpixel (20) comprises a fluidic chain comprising an image compartment (23) with an aperture (subpixel image aperture (24), through which exclusively the respective contents of the image compartment (23) is visible to an observer (B),
(b) the at least one pixel (10) comprises a pixel image aperture (11), through which essentially only the respective subpixel image aperture or apertures (24) is/are visible, and
whereby the apparatus also comprises means for the transport (12) of the colored fluids (F);
**characterized in that** the fluidic chain is provided in the form (i) of a plurality of compartments (21) for the separate storage of certain, specified colors (F) present in fluid form, between which (ii) these colored fluids (F) can be transported in channels (22), and wherein one of the colors (F) red, green, blue or cyan, magenta, yellow, white and black is contained in each of the compartments (21) of the at least one subpixel (20).

2. Apparatus as recited in claim 1, in which the means for the transport (12) of the colored fluids (F) originate from the group comprising fluid pumps and electrowetting.

3. Apparatus as recited in claim 1, in which at least one of the subpixels (20) comprises its own means for the transport (12) of the colored fluids (F); or at least one of the pixels (10) comprises at least one means for the transport (12) of the colored fluids (F) and one means for the selection of the subpixel (20); or at least one means for the transport (12) of the colored fluids and one means for the selection (13) of the respective pixel (10) and/or subpixel (20).

4. Apparatus as recited in claim 1, wherein the cross section (Q) through each compartment (21) and/or image compartment (23) is elliptical, quasi-elliptical or rounded at least in one cross sectional plane, and the cross section (Q) tapers toward the respective neighboring compartment (21').

5. Apparatus as recited in claim 1, **characterized in that** the individual compartments (21) or the image compartment (23) are formed by the fact that a channel (22) with essentially flat side walls (22') has, on at least two opposite sides (22'), periodic tapers (25) which narrow the channel (22) by at least 5% and by a maximum of 30%, and the length (L) of which is either not longer than 100 µm or at least 20% of the length of the compartment.

6. Apparatus as recited in claim 1, in which the subpixel image aperture (24) of each pixel (10) is sized and located so that they lie one above the other and inside the pixel image aperture (11).

7. Apparatus as recited in claim 1, in which the subpixel image apertures (21) of each pixel (10) is sized and located so that they lie directly next to each other and inside the pixel image aperture (11).

8. Apparatus as recited in claim 1, **characterized in that** essential parts of the fluidic chain are located in a double strand or in the form of a closed fluidic circuit.

9. Apparatus as recited in claim 6, in which the subpixel image aperture (24) is formed by the fact that on the side facing the observer (B) at least one additional subpixel (20') or a cover (26) covers all the areas that lie outside the subpixel image aperture (24).

10. Apparatus as recited in claim 8, in which the subpixel image aperture (24) or the image compartment (23) is located so that the other compartments (21) of the subpixel (20), seen from the direction of an observer (B), are located underneath the subpixel image aperture (24) located at one end of the double strand, so that they are covered by it.

11. Apparatus as recited in claim 9, in which at least two pixels (10) are located next to each other so that only the respective pixel image aperture (11) is visible by an observer (B).

12. Apparatus as recited in claim 1, wherein the individual colored fluids (F) in the compartments (21) and the image compartment (23) are arranged so that between the compartments (21), (23) that contain colored fluids (F), there is at least one space with a first perimeter (X) with a certain number of compartments (21), (23) that do not contain colored fluid (F), and that there is also exactly one space with a second perimeter (Y) which comprises a different number of compartments (21), (23) that do not contain colored fluid (F), the number of which is different from the number of spaces with the first perimeter (X), and that there are also means for the detection (27) of this space with a second perimeter (Y).

13. Apparatus as recited in claim 12, wherein the means for the detection (27) of the space with the second perimeter (Y) comprises effects from the group comprising capacitive, inductive, optical and/or resistive effects.

14. Apparatus as recited in claim 12, in which the number of the compartments (21) including the image compartment (23) equals exactly twice the number of colored fluids (F) plus 1.

15. Apparatus as recited in claim 1, wherein each pixel and/or each subpixel comprises at least one identifier to make possible its unambiguous identification, as well as a communications unit for unidirectional or bidirectional communication with an actuator unit for the preparation of the image to be displayed and for transmission to the pixels (10) and/or subpixels (20).

16. Apparatus as recited in claim 1, wherein the fluidic and/or the electronic components of the pixels are made essentially of plastic and can be manufactured by means of mass production methods.

17. Apparatus as recited in claim 1, wherein the subpixels 920) and the pixels (10) are made of a flexible material.

18. Method for the display of color information (color display) using
- at least one individual pixel (10), the color of which can be varied, whereby the pixel (10) consists of at least one subpixel (20), and whereby the subpixel (20) comprises a fluidic chain in the form of a plurality of compartments (21) for the separate storage of certain defined colors (F) that are present in the form of colored fluids, between which compartments these colored fluids (F) can be transported in channels (22), (22"), and whereby the fluidic chain of the respective subpixel (20) also comprises a fluid compartment (23) with an aperture (subpixel image aperture) (24), through which exclusively the current contents of the image compartment (23) are visible to an observer (B);
- at least one pixel image aperture (11), through which essentially only the respective subpixel image aperture or apertures (24) is/are visible;
- at least one means for the transport (12) of the colored fluids (F);
comprising the following steps:
- Determination of the position of at least one of the colored fluids (F) in each subpixel (20);
- Transport of the desired colored fluid (F) into the sub-pixel image aperture (24) by means for the transport (12) of the colored fluids (F);

19. Method as recited in claim 18, using at least two subpixels (20), and also comprising the steps:
- Determination of that combination of the colored fluids (F) of all the subpixels (20) that comes as close as possible to a desired color impression;
- Transport of the desired colored fluids (F) into the respective subpixel image apertures (24).

20. Method as recited in claim 18, whereby the apparatus for the determination of the position of at least one of the colored fluids (F) also comprises means for the detection (27) of a space with the second perimeter (Y), and whereby for the determination of the position of at least one of the colored fluids (F), the following processes are carried
- out simultaneously:
- Transport of the colored fluids (F);
- Operation of the means for the detection (27) of a space with the second perimeter (Y);
until the means for detection (27) has detected a space with the second perimeter (Y).

21. Method as recited in claim 18, whereby the apparatus for the determination of the position of at least one of the colored fluids (F) alternatively or in addition to the means for the detection (27) of a space with a second perimeter (Y) comprises means for the detection (27) of at least one of the colored fluids (F), and whereby for the determination of the position of at least one of the colored fluids (F), the following processes are carried out simultaneously:
- Transport of the colored fluids (F);
- Operation of the means for the detection (25) of at least one of the colored fluids (F); until the means for the detection (27) of at least one of the colored fluids (F) has detected a determined colored fluid (F).

22. Method as recited in claim 18, whereby
- the determination of the space with the second perimeter (Y) and/or of the position of at least one of the colored fluids (F) is performed so that prior to the first operation of each subpixel; (20), a one-time initialization of the subpixel takes place, and that
- during operation, when a change in the position of the space with a second perimeter (Y) and/or the position of at least one of the colored fluids (F) is necessary, the respective resulting new position is stored, so that
- the respective position can be retrieved before repeated operation.

## Revendications

1. Dispositif permettant l'affichage d'une information en couleur (afficheur couleur) moyennant l'utilisation d'au moins un point d'image (pixel) (10) individuel à couleur variable, dans lequel
(a) ledit au moins un pixel (10) est constitué d'au moins un sous-pixel (20), ledit sous-pixel (20) comportant une chaîne fluidique qui comporte un compartiment d'image (23) avec fenêtre (fenêtre d'image sous-pixellisée) (24), à travers laquelle exclusivement le contenu concerné du compartiment d'image (23) peut être détecté par un observateur (B),
(b) ledit au moins un pixel (10) comporte une fenêtre d'image pixellisée (11), à travers laquelle, pour l'essentiel, seulement la ou les fenêtre(s) d'image sous-pixellisée (24) respective(s) est/sont visible(s), et
ledit dispositif comportant, en outre, des moyens pour le transport (12) des couleurs (F) ;
**caractérisé en ce que** la chaîne fluidique est réalisée sous la forme (i) d'une pluralité de compartiments (21) pour la conservation discrète de couleurs (F) déterminées, définies et présentes sous forme liquide, entre lesquels (ii) ces couleurs (F) peuvent être transportées dans des canaux (22), et dans les compartiments (21) dudit au moins un sous-pixel (20) est contenu dans chaque cas l'une des couleurs (F) rouge, vert, bleu ou cyan, magenta, jaune, blanc et noir.

2. Dispositif selon la revendication 1, dans lequel les moyens pour le transport (12) des couleurs (F) sont issus du groupe comportant les pompes de liquide et l'électro-mouillage.

3. Dispositif selon la revendication 1, dans lequel au moins un des sous-pixels (20) comporte son propre moyen pour le transport (12) des couleurs (F) ; ou au moins l'un des pixels (10) comporte au moins un moyen pour le transport (12) des couleurs (F), ainsi qu'un moyen pour la sélection (13) du sous-pixel (20) ; ou il est prévu au moins un moyen pour le transport (12) des couleurs, ainsi qu'un moyen pour la sélection (13) du pixel (10) correspondant et/ou du sous-pixel (20) correspondant.

4. Dispositif selon la revendication 1, **caractérisé en ce que** la section transversale (Q) de respectivement un compartiment (21) et/ou compartiment d'image (23) est, au moins dans un plan de coupe, en forme d'ellipse, similaire à une ellipse ou arrondie, et la section transversale (Q) se rétrécit en direction du compartiment (21') respectivement adjacent.

5. Dispositif selon la revendication 1, **caractérisé en ce que** les différents compartiments (21) ou le compartiment d'image (23) sont formés par le fait qu'un canal (22) avec des parois latérales (22') sensiblement planes comporte des rétrécissements (25) périodiques sur au moins deux côtés (22') opposés, qui rétrécissent le canal (22) de 5 % au moins et de 30 % au plus, et leur longueur (L) mesure soit 100 µm au maximum, soit au moins 20 % de la longueur du compartiment.

6. Dispositif selon la revendication 1, dans lequel les fenêtres d'image sous-pixellisée (24) de respectivement un pixel (10) sont dimensionnées et disposées de telle sorte qu'elles sont situées les unes au-dessus des autres et à l'intérieur de la fenêtre d'image pixellisée (11).

7. Dispositif selon la revendication 1, dans lequel les fenêtres d'image sous-pixellisée (21) de respectivement un pixel (10) sont dimensionnées et disposées de telle sorte qu'elles sont situées directement les unes à côté des autres et à l'intérieur de la fenêtre d'image pixellisée (11).

8. Dispositif selon la revendication 1, **caractérisé en ce que** des parties essentielles de la chaîne fluidique sont disposées dans une double voie ou sous la forme d'un circuit fluidique fermé.

9. Dispositif selon l'une quelconque des revendications 6 à 8, dans lequel la fenêtre d'image sous-pixellisée (24) est formée par le fait que sur le côté orienté vers un observateur (B) au moins un sous-pixel (20') supplémentaire ou un cache (26) masquent toutes les zones situées en dehors de la fenêtre d'image sous-pixellisée (24).

10. Dispositif selon la revendication 8, dans lequel la fenêtre d'image sous-pixellisée (24) ou le compartiment d'image (23) est disposé de telle sorte que les autres compartiments (21) du sous-pixel (20) sont disposés, vus à partir de la direction d'un observateur (B), en dessous de la fenêtre d'image sous-pixellisée (24) située à une extrémité de la double voie, de telle sorte que qu'ils sont masqués par ladite fenêtre.

11. Dispositif selon la revendication 9, dans lequel deux pixels (10) sont disposés l'un à côté de l'autre de telle sorte que seule la fenêtre d'image pixellisée (11) concernée peut être vue par un observateur (B).

12. Dispositif selon la revendication 1, **caractérisé en ce que** les différentes couleurs (F) sont disposées dans les compartiments (21) et le compartiment d'image (23) de telle sorte qu'entre les compartiments (21), (23) avec les couleurs (F) se situe au moins un interstice d'une première étendue (X) avec un nombre déterminé de compartiments (21), (23) sans couleur (F), et **en ce que**, en outre, il existe précisément un interstice de deuxième étendue (Y) qui comporte un nombre de compartiments (21), (23) sans couleur (F) différent de celui de l'interstice de première étendue (X), et **en ce que**, en outre, il est prévu des moyens pour la détection (27) de cet interstice de deuxième étendue (Y).

13. Dispositif selon la revendication 12, **caractérisé en ce que** le moyen pour la détection (27) de l'interstice de deuxième étendue (Y) comporte des effets issus du groupe contenant des effets capacitifs, inductifs, optiques et/ou résistifs.

14. Dispositif selon la revendication 12 ou 13, dans lequel le nombre de compartiments (21), y compris le compartiment d'image (23), correspond précisément au double du nombre des couleurs (F) plus 1.

15. Dispositif selon la revendication 1, **caractérisé en ce que** chaque pixel et/ou chaque sous-pixel comporte au moins un identifiant pour la différenciation sans équivoque, ainsi qu'une unité de communication pour la communication unilatérale ou bilatérale avec une unité de commande pour la préparation de l'image à représenter et pour la transmission vers les pixels (10) et/ou les sous-pixels (20).

16. Dispositif selon la revendication 1, **caractérisé en ce que** les composants fluidiques et/ou les composants électroniques des pixels sont réalisés pour l'essentiel dans des matières plastiques et peuvent être fabriqués par des procédés de fabrication en série.

17. Dispositif selon la revendication 1, **caractérisé en ce que** les sous-pixels (20) et les pixels (10) sont réalisés dans un matériau flexible.

18. Procédé permettant l'affichage d'une information en couleur (afficheur couleur) moyennant l'utilisation
- d'au moins un point d'image (pixel) (10) individuel à couleur variable, ledit pixel (10) étant constitué d'au moins un sous-pixel (20), et ledit sous-pixel (20) comportant une chaîne fluidique sous la forme d'une pluralité de compartiments (21) pour la conservation discrète de couleurs (F) déterminées, définies et présentes sous forme liquide, entre lesquels ces couleurs (F) peuvent être transportées dans des canaux (22), (22"), et la chaîne fluidique du sous-pixel (20) concerné comportant, en outre, un compartiment d'image (23) avec fenêtre (fenêtre d'image sous-pixellisée) (24), à travers laquelle exclusivement le contenu respectif du compartiment d'image (23) peut être détecté par un observateur (B) ;
- d'au moins une fenêtre d'image pixellisée (11), à travers laquelle, pour l'essentiel, seulement la ou les fenêtre(s) d'image sous-pixellisée (24) respective(s) est/ sont visibles ;
- d'au moins un moyen pour le transport (12) des couleurs (F) ; comportant les étapes suivantes :
- constatation de la position d'au moins l'une des couleurs (F) dans chaque sous-pixel (20) ;
- transport de la couleur (F) souhaitée vers la fenêtre d'image sous-pixellisée (24) par le moyen pour le transport (12) dès couleurs (F).

19. Procédé selon la revendication 18 moyennant l'utilisation d'au moins deux sous-pixels (20), comportant en outre les étapes :
- constatation de la combinaison de couleur des couleurs (F) de tous les sous-pixels (20), laquelle se rapproche le plus d'une impression de couleur souhaitée ;
- transport des couleurs (F) souhaitées vers la fenêtre d'image sous-pixellisée (24) concernée.

20. Procédé selon la revendication 18, dans lequel le dispositif, en vue de la constatation de la position d'au moins une des couleurs (F), comporte, en outre, un moyen pour la détection (27) d'un interstice de deuxième étendue (Y), et, en vue de la constatation de la position d'au moins une des couleurs (F), les processus suivants sont mis en oeuvre simultanément :
- transport des couleurs (F) ;
- utilisation du moyen pour la détection (27) d'un interstice de deuxième étendue (Y) ;
jusqu'à ce que le moyen pour la détection (27) ait détecté un interstice de deuxième étendue (Y).

21. Procédé selon la revendication 18, dans lequel le dispositif, en vue de la constatation de la position d'au moins une des couleurs (F), comporte, en alternative ou en plus du moyen pour la détection (27) d'un interstice de deuxième étendue (Y), un moyen pour la détection (27) d'au moins une des couleurs (F), et, en vue de la constatation de la position d'au moins une des couleurs (F), les processus suivants sont mis en oeuvre simultanément :
- transport des couleurs (F) ;
- utilisation du moyen pour la détection (25) d'au moins une des couleurs (F) ;
jusqu'à ce que le moyen pour la détection (27) d'au moins une des couleurs (F) ait détecté une couleur (F) déterminée.

22. Procédé selon la revendication 18, dans lequel
- la détection de l'interstice de deuxième étendue (Y) et/ou de la position d'au moins une des couleurs (F) est réalisée par le fait qu'avant la première exploitation de chaque sous-pixel (20), il est effectué une seule initialisation de celui-ci ; et en ce que
- pendant le fonctionnement, dans lequel il est nécessaire de modifier la position de l'interstice de deuxième étendue (Y) et/ou la position d'au moins une des couleurs (F), la nouvelle position qui en résulte dans chaque cas est sauvegardée, de telle sorte que
- la position respective peut être prélevée avant un nouveau fonctionnement.
